# EUROPÄISCHE PATENTSCHRIFT

(11) **EP 1 984 196 B1**
(45) Veröffentlichungstag und Bekanntmachung des Hinweises auf die Patenterteilung: **24.06.2009**
(21) Anmeldenummer: 07711451.0
(22) Anmeldetag: 06.02.2007
(51) Int. Cl.: B60H 1/00, F28D 20/02, F28D 1/053

(54) **WÄRMEÜBERTRAGER, INSBESONDERE MIT KÄLTESPEICHER**
HEAT EXCHANGER IN PARTICULAR WITH COLD RESERVOIR
ÉCHANGEUR THERMIQUE COMPRENANT NOTAMMENT UN ACCUMULATEUR DE FROID

(30) Priorität: 10.02.2006 DE 102006006444; 14.06.2006 DE 102006028017
(43) Veröffentlichungstag der Anmeldung: 29.10.2008
(73) Patentinhaber: Behr GmbH & Co. KG, 70469 Stuttgart (DE)
(72) Erfinder: KERLER, Boris, 70176 Stuttgart (DE); KOHL, Michael, 74321 Bietigheim (DE); GROSSMANN, Sebastian, 71696 Möglingen (DE); NEUMANN, Emil, 70439 Stuttgart (DE); SEEWALD, Wolfgang, 70190 Stuttgart (DE)
(86) Internationale Anmeldenummer: PCT/EP2007/001016
(87) Internationale Veröffentlichungsnummer: WO 2007/090615

(56) Entgegenhaltungen:
- EP-A- 1 424 531
- FR-A1- 2 861 166
- US-A1- 2003 041 610
- US-A1- 2004 093 889

## Beschreibung

Die Erfindung betrifft einen Wärmeübertrager insbesondere für eine Kraft fahrzeug-Klimaanlage, mit Kältespeicher gemäß dem Oberbegriff des Anspruches 1. Ein solcher Wärmeübertrager ist aus FR 2 861 166 A1 bekannt.

Es ist ein Ziel der Kraftfahrzeughersteller, den Kraftstoffverbrauch des Fahrzeugs zu reduzieren. Eine Maßnahme zur Reduzierung des Kraftstaffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge oftmals nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann. Zum Teil wird das Problem auch dadurch gelöst, dass bei eingeschalteter Klimaanlage der Motor bei einem Stopp weiterläuft, wodurch jedoch ein höherer Kraftstoffverbrauch resultiert.

In der DE 101 56 944 A1 ist eine Klimaanlage für ein Kraftfahrzeug mit in einem Kältemütelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Dabei können die Rohre, in welchen das Kältemittel durch den Verdampfer strömt, als Mehrkanalrohre ausgebildet sein, wobei einer oder mehrere der Kanäle mit dem Kältespeichermedium gefüllt sind.

Ausgehend von diesem Stand der Technik ist es Aufgabe der Erfindung, einen verbesserten Wärmeübertrager zur Verfügung zu stellen. Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist ein Wärmeübertrager, insbesondere ein Verdampfer für eine Kraftfahrzeug-Klimaanlage zum Abkühlen von zu konditionierender Luft für den Innenraum vorgesehen, mit einer Mehrzahl nebeneinanderliegend angeordneter, kältemittelführender Rohre und mit wenigstens einem Kältespeicher, in welchem ein Kältespeichermedium vorgesehen ist. Hierbei weist der Verdampfer zwei parallel zueinander angeordnete und über die gesamte Breite verlaufende Bereiche auf, wobei der erste Bereich in seinem Aufbau einem herkömmlichen Verdampfer entspricht, der Kältespeicher in einen eigenständigen zweiten Bereich angeordnet ist, der von zumindest einem Teil des Kältemittelstroms durchströmbar ist, welcher auch zumindest ein Teil des ersten Bereichs durchströmt, und der erste und der zweite Bereich durch mindestens eine Überströmöffnung miteinander verbunden sind. Über die Überströmöffnung strömt zumindest ein Teilstrom von Kältemittel von einem Bereich in den anderen Bereich über, d.h. in beiden Bereichen strömt Kältemittel. Zwischen den Rohren des ersten und/oder des zweiten Bereichs des Wärmeübertragers können Wellrippen oder andere die Wärmeübertragungsfläche vergrößernde Elemente angeordnet sein. Dadurch, dass der erste Bereich im Wesentlichen dem eines herkömmlichen Wärmeübertragers entspricht, können vorhandene Werkzeuge weiter verwendet werden, lediglich die Werkzeuge für den zweiten Bereich und zur Herstellung der Überströmöffnung(en) muss neu besorgt werden. Der zweite Bereich ist - bei entsprechend der bisherigen Bauweise ausgestaltetem ersten Bereich - relativ einfach an den vorhandenen Bauraum und den Kühlbedarf anpassbar. Ferner ist nur ein Expansionsorgan erforderlich.

Auf Grund des modularen Aufbaus kann man einen derartig ausgebildeten Verdampfer auch als "Add-on"-Speicherverdampfer bezeichnen, d.h. der im Prinzip im Wesentlichen herkömmlichen Basisform des Verdampfers wird ein entsprechend ausgebildetes Kühlmodul zugefügt.

In einer bevorzugten Ausführungsform erstrecken sich der erste und der zweite Bereich über die gesamte Breite, wodurch eine hohe Leistungsfähigkeit bei kompakter Bauweise gegeben ist. Alternativ kann sich auch einer der Bereiche nur über einen Teil der gesamten Breite erstrecken, was je nach zur Verfügung stehendem Bauraum oder auch nach gewünschter Verteilung der Kälteleistungen von herkömmlichem Verdampfer und Speicherverdampfer gewünscht sein kann.

Bevorzugt sind genau zwei Überströmöffnungen vorgesehen, jedoch kann - bei einer getrennten Kältemittelzuführung - auch nur eine Überströmöffnung vorgesehen sein. Ebenso sind eine Mehrzahl von Überströmöffnungen möglich, durch die Kältemittel vom ersten Bereich zum zweiten Bereich und umgekehrt überströmen kann.

In mindestens einem Kältespeicherelement ist bevorzugt mindestens ein kältemittelführendes Rohr angeordnet. Dabei können die Kältespeicherelemente miteinander verbunden sein, insbesondere über mindestens einen Sammelbehälter.

Bei einer Anordnung des kältemittelführenden Rohres im Kältespeicherelement kann es in das mit dem Kältespeichermedium befüllte Kältespeicherelement eingesteckt sein oder aber direkt hierin ausgebildet sein, wobei das Kältespeichermedium bevorzugt das Kältemittel von allen Seiten umgibt, wobei insbesondere eine Rohr-in-Rohr-Anordnung vorgesehen ist.

Ebenfalls kann das Kältespeicherelement durch ein Rohr mit U-förmigem Querschnitt gebildet sein, insbesondere mit mehreren Kammern. Hierbei entsprechen bevorzugt die Innenabmessungen des Kältespeicherelements den Außenabmessungen des kältemittelführenden Rohres im entsprechenden Bereich, so dass die Rohre flächig aneinander anliegen. Auch eine einstückige Ausgestaltung, bspw. gebildet durch ein entsprechend extrudiertes Rohr mit mindestens zwei Kanälen, ist möglich.

Das kältemittelführende und das Kältespeichermedium enthaltende Rohr ist im Falle einer Anordnung vollständig innerhalb des Kältespeicherelements bevorzugt als ein doppelwandiges Flachrohr ausgebildet, wobei sich das Kältemittel im zentralen Bereich und das Kältespeichermedium im äußeren Bereich befindet. Gemäß einer weiteren bevorzugten Ausführungsform weist das doppelwandige Flachrohr Stege auf, die das außen liegende mit dem innen liegenden Flachrohr verbinden. Dadurch, dass der Kältespeicher direkten Luftkontakt hat, ergibt sich eine sehr gute Dynamik beim Wärmeübergang, so dass im Bedarfsfall, d.h. im Idle-stop-Betrieb, die volle Kälteleistung sofort zur Verfügung steht.

Das das Kältespeichermedium enthaltende Rohr kann das kältemittelführende Rohr auch nicht vollständig umgeben. Dabei sind vorzugsweise genau drei Seiten des kältemittelführenden Rohres vom das Kältespeichermedium enthaltenden Rohr umgeben. Das das Kättespeichermedium enthaltende Rohr kann dabei mit einem U-förmigen Querschnitt ausgebildet sein und das kältemittelführende Rohr, wobei es sich vorzugsweise um ein Flachrohr handelt, teilweise, d.h. über einen Teil seines Umfangs, umgeben, wobei bevorzugt der größte Teil des kättemtttefführenden Rohres im Inneren des das Kältespeichermedium enthaltenden Rohres angeordnet ist.

Bevorzugt enden die kältemittelführenden Rohre des zweiten Bereichs in einem Sammelbehälter, der getrennt von und lediglich über eine oder mehrere Überströmöffnungen mit einem Sammelbehälter des ersten Bereichs ausgebildet ist. Dies ermöglicht gegebenenfalls auch eine nachträgliche Aufrüstung des Wärmeübertragers mit einem Kältespeicher, insbesondere können aber die ersten Bereiche - abgesehen von den Überströmöffnungen - gleich ausgebildet sein, wie im Falle herkömmlicher Wärmeübertrager, so dass die Herstellungskosten in Folge größerer Stückzahlen und gleicher Werkzeuge für einen Großteil der Bauteile gesenkt werden können. Ferner können die beiden Bereiche getrennt zusammengesetzt und anschließend miteinander verbunden werden.

Die kältespeichermediumführenden Rohre beziehungsweise Kanäle enden vorzugsweise in einem Kältespeichermedium-Sammelbehälter, durch den die kältemittelführenden Rohre beziehungsweise Kanäle ragen, die in einem getrennten Sammelbehälter enden. Dies ermöglicht eine gemeinsame Befüllung der einzelnen Kältespeicherelemente mit dem Kältespeichermedium, so dass eine einfache und schnelle Befüllung der kältespeichermediumführenden Rohre beziehungsweise Kanäle möglich ist. Ferner kann die Montage durch die bevorzugt einstückige Ausgestaltung des Kältespeichers im Falle einer getrennten Ausbildung der kältemittelführenden Rohre und der Kältespeicherelemente vereinfacht werden. Auch kann dadurch ein Ausgleichsraum für insbesondere temperaturbedingte Volumenänderungen des Kältemittels zur Verfügung gestellt werden. Ferner ermöglicht dies eine kompakte Bauweise des zweiten Bereichs.

Bevorzugt weist der erste Bereich eine Anzahl von in unterschiedlicher Richtung vom Kältemittel durchströmbarer Blöcke in Richtung seiner Breite benachbart dem zweiten Bereich auf und der zweite Bereich mindestens einen Block, insbesondere eine Anzahl von in unterschiedlicher Richtung vom Kältemittel durchströmbarer Blöcke, auf. Dabei unterscheidet sich bevorzugt die Anzahl und/oder Breite der einzelnen Blöcke in Breitenrichtung des Verdampfers im ersten Bereich und im zweiten Bereich. Der erste Bereich weist vorzugsweise direkt benachbart zum zweiten Bereich zwei bis vier, insbesondere drei Blöcke, und der zweite Bereich einen bis sechs Blöcke, insbesondere ein bis drei Blöcke, auf.

Bevorzugt fluchten Flachrohrreihen des ersten Bereichs und des zweiten Bereichs miteinander, wobei jedoch auch nur hinter jedem n-ten, insbesondere jedem zweiten oder dritten Flachrohr, des ersten Bereichs ein Flachrohr des zweiten Bereichs angeordnet sein kann, so dass der Luftströmungswiderstand möglichst gering ist, jedoch können die Flachrohrreihen auch unregelmäßig oder versetzt (z.B. mittig auf Lücke) angeordnet sein, oder die Kältespeicherelemente mit den hierin angeordneten kältemittelführenden Rohren können gegenüber den anderen Flachrohren des Verdampfers verdreht angeordnet sein. Die Anzahl und Gestalt der Flachrohre des zweiten Bereichs kann entsprechend der gewünschten Wärmemenge im Falle eines Fahrzeugstopps gewählt werden.

Der zweite Bereich des Verdampfers ist bevorzugt in normaler Luftströmungsrichtung gesehen nach dem ersten Bereich des Verdampfers, insbesondere direkt in Anschluss an den Verdampfer, angeordnet, aber es ist ebenfalls eine Anordnung vor dem Verdampfer oder etwas beabstandet vom Verdampfer möglich in einem zweiten, insbesondere kleineren Verdampferteil. Insbesondere im Falle einer beabstandeten Anordnung vom (Haupt-)Verdampfer kann die Größe des Sammlers mit Kältespeicher entsprechend dem vorhandenen Bauraum und/oder den Erfordernissen angepasst werden. Besonders vorteilhaft ist, dass der bestehende Verdampfer nicht oder nur unwesenttich abgeändert werden muss, so dass eine relativ einfache Integration des Kältespeichers in bestehende Systeme möglich ist. Vorhandene Werkzeuge müssen nicht (oder nur unwesentlich) abgeändert werden. Lediglich die Werkzeuge für den Kältespeicherbereich des Verdampfers, der angefügt wird, müssen beschafft werden.

Bei den Rohren, welche vom Kältemittel durchströmt werden, handelt es sich vorzugsweise um geschweißte, gefalzte, aus Scheiben tiefgezogene oder extrudierte Flachrohre, die sowohl abgerundet als auch eckig ausgebildet sein können. Jedoch können auch bspw. ovale Rohre oder Rundrohre verwendet werden. Als Materialien kommen insbesondere Aluminium und Aluminiumlegierungen in Frage, jedoch ist auch die Verwendung beliebiger anderer geeigneter, gut wärmeleitender Materialien möglich.

Der Kättespeicher besteht bevorzugt aus Aluminium, insbesondere innen und/oder außen beschichtetem Aluminium (wobei unter Aluminium auch eine Aluminiumlegierung zu verstehen ist), gegebenenfalls auch Kupfer, einer Kupfer-Zink-Legierung, Kunstharz oder Kunststoff. Ein Aluminium-Behälter hat den Vorteil, dass er sich mit den übrigen Teilen des Verdampfers problemlos verlöten lässt. Dabei handelt es sich bevorzugt um ein stranggepresstes Flachrohr, das eine Mehrzahl von Kanälen aufweist, wobei ein Teil der Kanäle das Kältespeichermedium und der andere Teil der Kanäle das Kältemittel enthalten. Die Ausgestaltung kann jedoch auch mehrteilig sein.

Beim Latent- oder Speichermedium handelt es sich bevorzugt um ein PCM-Material (phase change material), das bevorzugt kongruent schmelzende Medien, insbesondere Decanol, Tetra-, Penta- oder Hexadecan, Li-ClO₃3H₂O, wässrige Salzlösungen oder organische Hydrate enthält oder hieraus gebildet ist Im Speichermedium können auch Keimbildner vorgesehen sein, welche die Kristallbildung beschleunigen.

Die Phasenumwandtumgstemeratur des Speichermedium liegt vorzugsweise in einem Bereich von 0°C bis 30°C, bevorzugt von 1°C bis 20°C, insbesondere von 2°C bis 15°C, insbesondere bevorzugt von 4°C bis 12°C.

Im Inneren des Kältespeicherelements können - unabhängig ob es das kältemittelführende Rohr ganz oder nur teilweise umgibt - Einlagen, wie Rippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststofifschäume, vorgesehen sein. Die Einlagen dienen zur Verbesserung des Wärmetransport sowie zur Erhöhung der inneren Oberfläche um die Kristallbildung des Speichermediums zu beschleunigen.

Die Durchströmung der beiden Bereiche erfolgt vorzugsweise seriell bzw. parallel, so dass nur ein, insbesondere ein und dasselbe Expansionsorgan für beide Bereiche vorgesehen ist. Hierbei ist der Kältemitteleintritt bevorzugt am Sammler des ersten Bereichs vorgesehen. Parallel kann in diesem Zusammenhang auch bedeuten, dass einer der Teilströme im Verhältnis zum anderen relativ klein ist, insbesondere, dass der Anteil durch den zweiten Bereich relativ klein im Verhältnis zum Anteil durch den ersten Bereich ist.

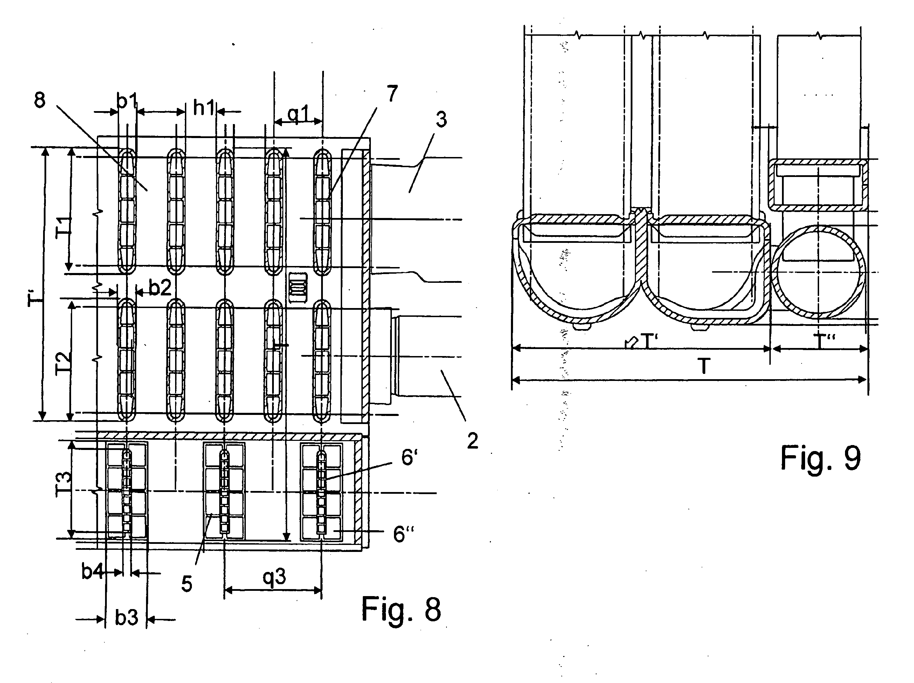

Bevorzugt hat der Wärmeübertrager folgende Abmessungen (bezüglich der Maße wird auf die Figuren 8 und 9 erwiesen):

Die Gesamttiefe T des Wärmeübertragers beträgt bevorzugt 23 bis 200 mm, insbesondere 35 bis 80 mm, besonders bevorzugt 60 +/- 10 mm. Auch 35 bis 100 mm ist denkbar.

Die Bautiefe T' beträgt bevorzugt 20 bis 150 mm, insbesondere 25 bis 90 mm. Die Bautiefen T1 und T2 der Flachrohre des Verdampfers im Bereich ohne Kältespeicher entsprechen in der Regel einander (symmetrische Ausgestaltung dieses Verdampferbereichs). Die Bautiefe des Speicherelements T" kann 5 bis 100 mm, vorzugsweise 10 bis 40 mm betragen.

Für die Höhe H und die Breite B bieten sich vorteilhafterweise für H und B 50 bis 500 mm, insbesondere für H 100 bis 300 mm und B 100 bis 350 mm an

Die Breiten b1 und b2 der Flachrohre des Verdampfers im Bereich ohne Kältespeicher entsprechen vorzugsweise einander, wobei bevorzugt je ein Flachrohr der einen Reihe mit einem Flachrohr der anderen Reihe fluchtet. Die Breiten b1 und b2 betragen vorzugsweise 0,8 bis 4 mm, insbesondere 1,3 bis 3,5 mm, besonders bevorzugt 1,0 bis 3,2 mm.

Die Querteilung q1 der ersten Flachrohrreihe beträgt vorzugsweise 4 bis 20 mm, insbesondere bevorzugt 5 bis 13 mm. Sie entspricht bevorzugt der Querteilung der zweiten Flachrohrreihe des Verdampfers.

Die Höhe der Wellrippe der ersten Flachrohrreihe beträgt somit bevorzugt 3 bis 18 mm, insbesondere 4 bis 10 mm. Sie entspricht bevorzugt der Wellrippenhöhe der zweiten Flachrohrreihe des Verdampfers.

Der Verdampfer im Bereich des Kältespeichers weist Flachrohre, welche das Kältespeichermedium in den äußeren Kältespeichermedium-Kanälen enthalten, mit Breiten b3 von vorzugsweise 2,0 bis 10,0 mm, insbesondere von 3,0 bis 8,0 mm, auf. Die Breite b4 der hierin angeordneten Flachrohre, in deren Kältemittel-Kanälen das Kältemittel strömt, beträgt vorzugsweise 0,6 bis 2,5 mm, insbesondere 0,9 bis 1,5 mm. Denkbar sind jedoch auch 0,6 bis 2,5 mm, insbesondere 0,9 bis 2 mm.

Die Bautiefe T3 der Flachrohre des Verdampfers im Bereich mit Kältespeicher beträgt vorzugsweise 5 bis 70 mm, insbesondere bevorzugt 10 bis 30 mm. Auch der Bereich von 8 bis 20 mm, insbesondere 10 bis 13 mm kann sich als vorteilhaft erweisen. Für die Außenabmessungen der das Latentspeichermedium enthaltenden Rohre, in denen Vorteilhafterweise kältemitteldurchströmte Flachrohre angeordnet sind, haben sich eine Bautiefe von 7 bis 80 mm, vorzugsweise von 10 bis 26 mm, besonders bevorzugt von 12 bis 16 mm als günstig erwiesen.

Die Querteilung q3 der Flachrohre des Verdampfers im Bereich mit Kältespeicher beträgt vorzugsweise ein Vielfaches von q1, um so den Druckabfall der durchströmenden Luft gering zu halten, kann aber auch q1 entsprechen. Besonders bevorzugte Werte sind zwei und drei. Als typische Werte von q3 ergeben sich üblicherweise 4 bis 30 mm, insbesondere 9 bis 22 mm. Die Wellrippenhöhe kann Vorteilhafterweise mit 2 bis 20 mm, insbesondere mit 4 bis 10 mm gewählt werden.

Die Höhe H1 der Kältespeichermedium-Sammelbehälter beträgt bevorzugt 3 bis 25 mm, insbesondere 3 bis 15 mm, ist jedoch vorzugsweise so klein wie möglich, um Bauraum zu sparen und den von Luft durchströmbaren Querschnitt so groß wie möglich zu hatten. Auch 5 bis 40 mm, insbesondere 10 bis 20 mm können sich in diesem Zusammenhang als besonders vorteilhaft erweisen.

In einer weiteren bevorzugten Ausführungsform sind ein erster Sammelbehälter für das Kältemittel und ein benachbarter zweiter Sammelbehälter für das Kältespeichermedium im Wesentlichen aus zumindest einem Blechformteil ausgebildet, wodurch eine kostengünstige Serienfertigung vereinfacht ist. Besonders bevorzugt sind dabei der erste Sammelbehälter und der zweite Sammelbehälter insgesamt im Wesentlichen aus drei Blechformteilen ausgebildet, umfassend ein Bodenteil, ein Zwischenteil und ein Deckelteil. Dies ermöglicht einerseits eine einfache Herstellung der einzelnen Blechformteile und andererseits eine noch gut beherrschbare Kombination der Blechteile zu den beiden Sammelbehältern, beispielsweise mittels gleichzeitiger Verlötung der zusammengesetzten Formteile in einem Lötofen auf an sich bekannte Weise. Hierzu ist zumindest eines der drei Blechformteile als im Wesentlichen wannenförmiges Teil mit einem umlaufenden, insbesondere im Bereich einer Stirnseite aufgebogenen Rand ausgebildet. Dies ermöglicht nicht nur eine einfache Vormontage und zuverlässige Verlötung, sondern spart auch zusätzliche Teile wie etwa stirnseitige Abschlussdeckel.

Der Begriff Blechformteil ist vorliegend grundsätzlich breit auszulegen. Neben klassischen Blechen aus einem metallischen Material fallen darunter insbesondere Formteile, deren Dicke im Verhältnis zu deren sonstigen Abmessungen relativ klein ist.

Im Sinne einer kostengünstigen Fertigung ist zumindest eines der drei Blechformteile als Tiefziehteil ausgebildet, wodurch besonders bei Verwendung von Aluminium und/oder Aluminiumlegierungen als Blechmaterial eine komplexe Formgebung ermöglicht ist.

In vorteilhafter Weiterbildung weist zumindest eines der drei Blechformteile eine Lasche zur klemmenden Halterung eines der anderen Blechformteile auf. Durch diese klemmende Halterung ist eine Vormontage vor einer gemeinsamen Verlötung in einem Lötofen vereinfacht und eine Fehlerrate bei der Verlötung reduziert.

In vorteilhafter Detailgestaltung verlaufen eine obere Bodenebene eines unteren Sammelbehälters des zweiten Bereichs und eine obere Bodenebene eines unteren Sammelbehälters des ersten Bereichs im Wesentlichen in der gleichen Höhe. Hierdurch kann angesammeltes Kondenswasser des ersten Bereichs über den zweiten Bereich ablaufen und umgekehrt, so dass eines Wasserablauf des Wärmetauschers flexibel angeordnet werden kann.

Um ein ausreichendes Volumen für das Kältespeichermedium auch bei begrenzten Außenmasse des Wärmeübertragers bereitzustellen, kann vorteilhaft eine Bauhöhe eines Sammelbehälters des zweiten Bereichs größer sein als eine Bauhöhe eines Sammelbehälters des ersten Bereichs.

Bei einer besonders bevorzugten Ausführungsform sind in dem zweiten Bereich ein oberer Sammlerbereich und ein unterer Sammlerbereich mit jeweils einem ersten Sammelbehälter für das Kältemittel und einem benachbarten zweiten Sammelbehälter für das Kältespeichermedium vorgesehen, wobei der obere Sammelbereich und der untere Sammelbereich über eine Mehrzahl von Rohren verbunden sind, wobei zumindest eines der Rohre zumindest einen ersten Kanal zur Führung des Kältemittels und zumindest einen durch eine Trennwand separierten zweiten Kanal zur Führung des Kältespeichermediums aufweist. Dabei erfolgt ein Hauptteil einer Wärmeübertragung zwischen Kältemittel und Speichermedium über die Trennwand, wobei die ersten Kanäle zugleich die Funktion von herkömmlichen Verdampferkanälen im Zuge der Durchströmung mit dem Kältemittel aufweisen. Insgesamt wird hierdurch eine kompakte Bauweise mit hoher Wärmeübertragungsleistung bereitgestellt.

In einer einfach herstellbaren Variante ist dabei einer der Kanäle als ein äußeres Rohr und der andere der Kanäle als in das äußere Rohr eingesetztes inneres Rohr ausgebildet, wodurch zugleich eine große Trennwandfläche gegeben ist. Bei dieser Version ineinandergesteckter Rohre sind zur Vermeidung von Vibrationen und zur Vergrößerung thermisch gut leitfähiger Kontaktbereiche zweckmäßig an zumindest einem von beiden, äußerem Rohr oder innerem Rohr, Mittel zur radialen Führung des jeweils anderen Rohrs ausgebildet. Alternativ können auch inneres Rohr und äußeres Rohr als einheitliches Strangpressprofil ausgeformt sein. Weiterhin alternativ können die Rohre bzw. Kanäle auch nebeneinander und nicht ineinander angeordnet sein.

In zweckmäßiger Detailgestaltung der ineinander angeordneten Kanäle ist das innere Rohr der erste Kanal zur Führung des Kältemittels und das äußere Rohr der zweite Kanal zur Führung des Kältespeichermediums. Zum einen hat der Kältemittelkanal zumeist einen kleineren Gesamtquerschnitt und zum anderen ist es zumeist gewünscht, dass das Kältespeichermedium in gutem thermischen Austausch mit der das äußere Rohr umströmenden Luft steht, um eine schnelle Bereitstellung der gespeicherten Kälte bei gestopptem Verdichter zu gewährleisten.

Im Interesse einer konstruktiv kleinbauenden Lösung weist einer der Kanäle einen endseitigen Überstand über den anderen Kanal auf, wobei einer der Sammelbehälter von dem überstehenden Kanal vollständig durchgriffen wird. Somit endet auf einfache Weise das kürzer endende Rohr nur in dem ersten Sammelbehälter, wobei das längere Rohr diesen abgedichtet durchgreift und in dem benachbarten zweiten Sammelbehälter endet.

In bevorzugter Ausführung ist zumindest einer der Kanäle als extrudiertes Profil ausgebildet, wodurch kostengünstig eine komplexe Formgebung des Kanals zum Beispiel mit einer Mehrzahl von separaten Kammern und/oder ausgeformten Mitteln zur radialen Abstützung des anderen Kanals ermöglicht ist.

In einer weiteren vorteilhaften Detailgestaltung weist ein Sammlerbereich des zweiten Bereichs zumindest einen im Wesentlichen ebenen Abschnitt auf, der mit einem korrespondierenden, im Wesentlichen ebenen Abschnitt eines Sammlerbereichs des ersten Bereichs flächig verlötet ist. Auf diese Weise ist der zweite Bereich einfach und sicher an dem ersten Bereich festlegbar, insbesondere im Wege einer vollständigen Verlötung des vormontierten Wärmeübertragers in einem Lötofen. Zudem können der erste und der zweite Bereich als separate Module ohne Bevorratung oder Montage von weiteren Festlegemitteln vorgesehen sein, was die Produktion von Wärmeübertragem mit und ohne Kältespeicher insgesamt effizienter macht. Besonders zweckmäßig weisen die miteinander verlöteten ebenen Abschnitte eine Durchbrechung zur Ausbildung der Überströmöffnung auf, so dass die flächige Verlötung zugleich einer mechanischen Halterung als auch einer Erzeugung der Überströmöffnung dient. Die Durchbrechung kann dabei je nach Bauform und Verschaltung der Fluidwege in der individuellen Serie in dem ebenen Bereich vorgenommen werden. Zum Beispiel können so immer mehrere ebene Abschnitte vorgesehen sein und zur mechanischen Halterung verlötet werden, wogegen nur eine Teilmenge der ebenen Abschnitte mit Durchbrechungen zur Herstellung eines Kältemitteldurchtritts versehen wird.

In vorteilhafter Detailgestaltung ist der im Wesentlichen ebene Abschnitt nach Art eines Erkers aus einer Wandung des Sammelbereichs ausgeformt. Dies ermöglicht eine definierte Anlage und gute flächige Verlötung der benachbarten Sammelbereiche aneinander. Besonders bevorzugt ist zudem eine Verbindungsfläche zur flächigen Verlötung der ebenen Abschnitte aus einer Fläche des Erkers herausgezogen. Auch bei gegebenen Toleranzen und einem gewissen Verzug der Bauteile kann hierdurch eine zuverlässige flächige Verlötung erzielt werden, zum Beispiel in Kombination mit einem geeigneten Klammern oder Anpressen der Teile vor einer Behandlung in einem Lötofen.

Für einen allgemeinen Wärmeübertrager, insbesondere für ein Kraftfahrzeug, nach dem Oberbegriff des Anspruchs 30 wird die Aufgabe der Erfindung mit den kennzeichnenden Merkmalen des Anspruchs 30 gelöst. Durch die Ausbildung der benachbarten Sammelbehälter mittels eines oder mehrerer Blechformteile wird eine kostengünstige Herstellung bei besonders wenig Ausschuss ermöglicht. Der Aufbau solcher Bereiche aus Blechformteilen also mittels Tiefziehen und/oder Stanzen und/oder ähnlichen Verfahren umgeformten Blechen, ist günstig und gut mit einer Verlötung in einem Lötofen kombinierbar. Hierdurch kann weitgehend oder vollständig auf aufwendige Bearbeitungsschritte wird etwa spanende Formgebung der Sammlerbereiche verzichtet werden. Selbstverständlich ist der Begriff Blechformteil auch in diesem Zusammenhang, wie bereits erwähnt, grundsätzlich breit auszulegen.

In bevorzugter Weiterbildung sind der erste Sammelbehälter und der zweite Sammelbehälter insgesamt im Wesentlichen aus drei Blechformteilen ausgebildet, umfassend ein Bodenteil, ein Zwischenteil und ein Deckelteil. Grundsätzlich können zwei benachbarte Sammelbehälter auch aus nur einem oder aus zwei oder auch aus mehr als drei Formteilen aufgebaut werden, wobei sich in der Praxis der Aufbau aus drei Formteilen als guter Kompromiss erwiesen hat. Dabei ist zu berücksichtigen, dass sowohl eine zunehmende Anzahl separater und eher einfach geformter Teile nachteilig ist, da aufgrund der zunehmenden Anzahl an Lötstellen die Ausfallrate bei der Herstellung steigt. Bei weniger als drei Formteilen zur Herstellung der beiden Sammelbehälter hat sich dagegen die Formgebung der Blechformteile bzw. deren anschließende Bearbeitung als relativ aufwendig erwiesen.

Besonders bevorzugt ist zumindest eines der drei Blechformteile als im Wesentlichen wannenförmiges Teil mit einem umlaufenden, insbesondere im Bereich einer Stirnseite aufgebogenen Rand ausgebildet. Hierdurch lässt sich eine sichere und flächige Verlötung an einer Seite des Randes erzielen,
wobei durch den umlaufenden Rand zudem auf zusätzliche Abschlussteile wie etwa stirnseitige Deckel verzichtet werden kann. Vorteilhaft ist zumindest eines der drei Blechformteile als Tiefziehteil ausgebildet, wobei zum Beispiel ein wannenförmiges Teil zweckmäßig mittels Tiefzeihen hergestellt wird.

Weiterhin bevorzugt weist zumindest eines der drei Blechformteile eine Lasche zur klemmenden Halterung eines der anderen Blechformteile auf, wodurch eine Vormontage vor Einbringen in einen Lötofen verbessert ist.

In einer vorteilhaften Ausführungsform kann der Wärmeübertragers nach einem der Ansprüche 30 bis 34 einen inneren Wärmetauscher einer Kraftfahrzeug-Klimaanlage umfassen, insbesondere einen inneren Wärmetauscher einer CO2-Klimaanlage, wobei das erste und das zweite Fluid CO2 aus verschiedenen Bereichen eines Kältekreises ist. Die spezifischen Anforderungen eines inneren Wärmeübertragers von CO2-Klimaanlagen lassen sich durch eine solche Bauform kostengünstig erfüllen.

Vorteilhaft ist, dass zumindest eines der drei Blechformteile eine Lasche zur klemmenden Halterung eines der anderen Blechformteile aufweist.

Vorteilhaft ist, dass eine obere Bodenebene eines unteren Sammelbehälters des zweiten Bereichs und eine obere Bodenebene eines unteren Sammelbehälters des ersten Bereichs im Wesentlichen in der gleichen Höhe verlaufen.

Vorteilhaft ist, dass eine Bauhöhe eines Sammlerbereichs des zweiten Bereichs größer ist als eine Bauhöhe eines benachbarten Sammelbehälters des ersten Bereichs.

Vorteilhaft ist, dass in dem zweiten Bereich ein oberer Sammlerbereich und ein unterer Sammlerbereich mit jeweils einem ersten Sammelbehälter für das Kältemittel und einem benachbarten zweiten Sammelbehälter für das Kältespeichermedium vorgesehen sind, wobei der obere Sammelbereich und der untere Sammelbereich über eine Mehrzahl von Rohren verbunden sind, wobei zumindest eines der Rohre zumindest einen ersten Kanal zur Führung des Kältemittels und zumindest einen durch eine Trennwand separierten zweiten Kanal zur Führung des Kältespeichermediums aufweist.

Vorteilhaft ist, dass einer der Kanäle als ein äußeres Rohr und der andere der Kanäle als in das äußere Rohr eingesetztes inneres Rohr ausgebildet ist.

Vorteilhaft ist, dass an zumindest einem von beiden, äußerem Rohr oder innerem Rohr, Mittel zur radialen Führung des jeweils anderen Rohrs ausgebildet sind.

Vorteilhaft ist, dass das innere Rohr der erste Kanal zur Führung des Kältemittels und das äußere Rohr der zweite Kanal zur Führung des Kältespeichermediums ist.

Vorteilhaft ist, dass einer der Kanäle einen endseitigen Überstand über den anderen Kanal aufweist, wobei einer der Sammelbehälter von dem überstehenden Kanal vollständig durchgriffen wird.

Vorteilhaft ist, dass zumindest einer der Kanäle als extrudiertes Profil ausgebildet ist.

Vorteilhaft ist, dass zumindest einer der Kanäle eine Mehrzahl von separaten Kammern aufweist.

Vorteilhaft ist, dass ein Sammlerbereich zumindest des zweiten Bereichs zumindest einen im Wesentlichen ebenen Abschnitt aufweist, der mit einem korrespondierenden, im Wesentlichen ebenen Abschnitt eines Sammlerbereichs des ersten Bereichs flächig verlötet ist.

Vorteilhaft ist, dass die miteinander verlöteten ebenen Abschnitte eine Durchbrechung zur Ausbildung der Überströmöffnung aufweisen.

Vorteilhaft ist, dass der im Wesentlichen ebene Abschnitt nach Art eines Erkers aus einer Wandung des Sammelbereichs ausgeformt ist.

Vorteilhaft ist, dass eine Verbindungsfläche zur flächigen Verlötung der ebenen Abschnitte aus einer Fläche des Erkers herausgezogen ist.

Vorteilhaft ist eine Klimaanlage mit Kältespeicher, insbesondere für ein Kraftfahrzeug, mit einem Kältemittelkreislauf, gekennzeichnet durch einen Verdampfer.

Vorteilhaft ist ein Wärmeübertrager, insbesondere für ein Kraftfahrzeug, umfassend
einen ersten Sammlerbereich und einen zweiten Sammlerbereich mit jeweils einem ersten Sammelbehälter für ein erstes Fluid und einem benachbarten zweiten Sammelbehälter für ein zweites Fluid,
wobei der erste Sammelbereich und der zweite Sammelbereich über eine Mehrzahl von Rohren verbunden sind,
wobei zumindest eines der Rohre zumindest einen ersten Kanal zur Führung des ersten Fluids und zumindest einen durch eine Trennwand separierten zweiten Kanal zur Führung des zweiten Fluids aufweist, so dass ein Hauptteil einer Wärmeübertragung zwischen den Fluiden über die Trennwand erfolgt,
wobei der erste Sammelbehälter und der zweite Sammelbehälter zumindest eines der Sammelbereiche insgesamt im Wesentlichen aus zumindest einem Blechformteil ausgebildet ist.

Vorteilhaft ist, dass der erste Sammelbehälter und der zweite Sammelbehälter insgesamt im Wesentlichen aus drei Blechformteilen ausgebildet sind, umfassend ein Bodenteil, ein Zwischenteil und ein Deckelteil.

Vorteilhaft ist, dass zumindest eines der drei Blechformteile als im Wesentlichen wannenförmiges Teil mit einem umlaufenden, insbesondere im Bereich einer Stirnseite aufgebogenen Rand ausgebildet ist.

Vorteilhaft ist, dass zumindest eines der drei Blechformteile als Tiefziehteil ausgebildet ist.

Vorteilhaft ist, dass zumindest eines der drei Blechformteile eine Lasche zur klemmenden Halterung eines der anderen Blechformteile aufweist.

Vorteilhaft ist, dass der Wärmeübertrager einen inneren Wärmetauscher einer Kraftfahrzeug-Klimaanlage umfasst, insbesondere einen inneren Wärmetauscher einer CO2-Klimaanlage, wobei das erste und das zweite Fluid CO2 aus verschiedenen Bereichen eines Kältekreises ist.

Im Folgenden wird die Erfindung anhand zweier Ausführungsbeispiele mit Varianten, teilweise unter Bezugnahme auf die Zeichnung, im Einzelnen erläutert. Es zeigen:
- Fig. 1: eine perspektivische Ansicht eines Wärmeübertragers mit Sammler gemäß dem ersten Ausführungsbeispiel,
- Fig. 2: eine Seitenansicht des Wärmeübertragers von Fig. 1,
- Fig. 3: eine ausschnittsweise, perspektivische Ansicht des Wärmeübertragers von Fig. 1 mit abgenommenem Sammelkasten und Sammelrohr,
- Fig. 4: eine weitere perspektivische Ansicht eines Bereichs des Wärmeübertragers von Fig. 1 mit seitlich geöffneten Sammelbehälter und -rohr,
- Fig. 5: eine geschnittene Seitenansicht des Wärmeübertragers von Fig. 1,

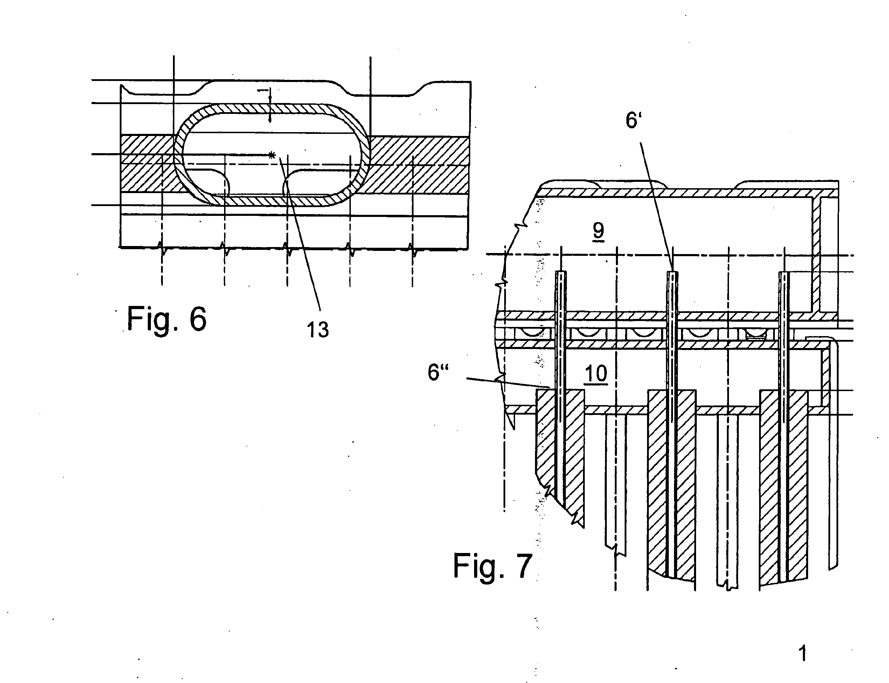

- Fig. 6: eine Detailansicht einer Überströmöffnung,
- Fig. 7: eine geschnittene Detailansicht des Wärmeübertragers von Fig. 1 im Bereich des Kältespeichers,
- Fig 8: einen Schnitt quer durch den Wärmeübertrager von Fig. 1,
- Fig. 9: einen Schnitt durch den unteren Bereich des Wärmeübertragers von Fig. 1,
- Fig. 10: eine perspektivische Ansicht des Wärmeübertragers von Fig. 1 mit schematischer Darstellung des Kältemittelströmungsverlaufs,
- Fig. 11: eine schematische Schnittdarstellung des Wärmeübertragers von Fig. 1 zur Verdeutlichung des Kältemittelströmungsverlaufs,
- Fig. 12: eine schematische Seitenansicht des Wärmeübertragerbereichs mit dem Kältespeicher von Fig. 1 zur Verdeutlichung des Kältemittelströmungsverlaufs,
- Fig. 13a, b: schematische Darstellungen des Kältemittelströmungsverlaufs gemäß einer ersten Variante,
- Fig. 14a, b: schematische Darstellungen des Kältemittelströmungsverlaufs gemäß einer zweiten Variante,
- Fig. 15a, b: schematische Darstellungen des Kältemittelströmungsverlaufs gemäß einer dritten Variante,
- Fig. 16a, b: schematische Darstellungen des Kältemittelströmungsverlaufs gemäß einer vierten Variante,
- Fig. 17a, b: schematische Darstellungen des Kättemittelströmungsverlaufs gemäß einer fünften Variante, und
- Fig. 18a, b: schematische Darstellungen des Kältemittelströmungsverlaufs gemäß einer sechsten Variante.
- Fig. 19: eine räumliche Gesamtansicht eines zweiten Ausführungsbeispiels eines erfindungsgemäßen Wärmeübertragers,
- Fig. 20: eine teilweise Schnittansicht des Wärmeübertragers aus Fig. 19,
- Fig. 21: eine weitere teilweise Schnittansicht des Wärmeübertragers aus Fig. 19,
- Fig. 22: eine Draufsicht auf Deckelteile eines ersten Bereichs des Wärmeübertragers aus Fig. 19,
- Fig. 23: eine Schnittansicht durch die Deckelteile aus Fig. 22 entlang der Linie A-A,
- Fig. 24: eine Draufsicht von der Seite auf ein Deckelteil eines zweiten Bereichs des Wärmeübertragers aus Fig. 19,
- Fig. 25: eine Draufsicht von oben auf ein Zwischenteil des Wärmeübertragers aus Fig. 19,
- Fig. 26: eine seitliche Draufsicht auf das Zwischenteil aus Fig. 25,
- Fig. 27: eine Draufsicht auf ein Bodenteil des Wärmeübertragers aus Fig. 19,
- Fig. 28: eine Schnittansicht eines zweikanaligen Rohrs des zweiten Bereichs des Wärmeübertragers aus Fig. 19,
- Fig. 29: eine räumliche Explosionsansicht eines dritten Ausführunbeispiels eines erfindungsgemäßen Wärmeübertragers,
- Fig. 30: eine schematische Darstellung mehrerer verschiedener Bauprinzipien eines erfindungsgemäßen Wärmeübertragers.

Eine Kraftfahrzeug-Klimaanlage zum Temperieren des Kraftfahrzeug-Innenraums mit einem Kältemittel-Kreislauf (vorliegend R134a, jedoch kann bspw. auch CO₂ oder ein andres Kaltemitteil verwendet werden) von der nur der Verdampfer 1, mit Einspritzrohr 2 und Saugrohr 3 dargestellt ist, weist, um auch bei einem Motorstopp zumindest über einen kurzen Zeitraum eine ausreichende Kühlleistung zur Verfügung zu stellen, einen Kältespeicher 4 auf, bestehend aus einer Mehrzahl von Kältespeicherelementen 5, vorliegend zweiundzwanzig, welche mit einem Kältespeichermedium gefüllt sind. Die Kältespeicherelemente 5 sind durch Bereiche speziell ausgestalteter Flachrohre 6 aus Aluminium gebildet, auf die an späterer Stelle näher eingegangen wird. Als Kältespeichermedium dient vorliegend Decanol. Alternativ sind beispielsweise auch Tetra-, Penta- oder Hexadecan geeignet.

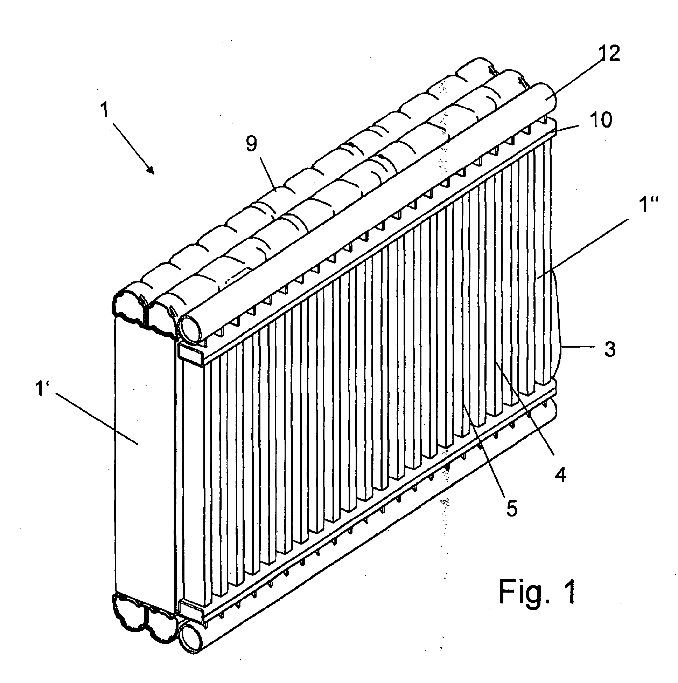

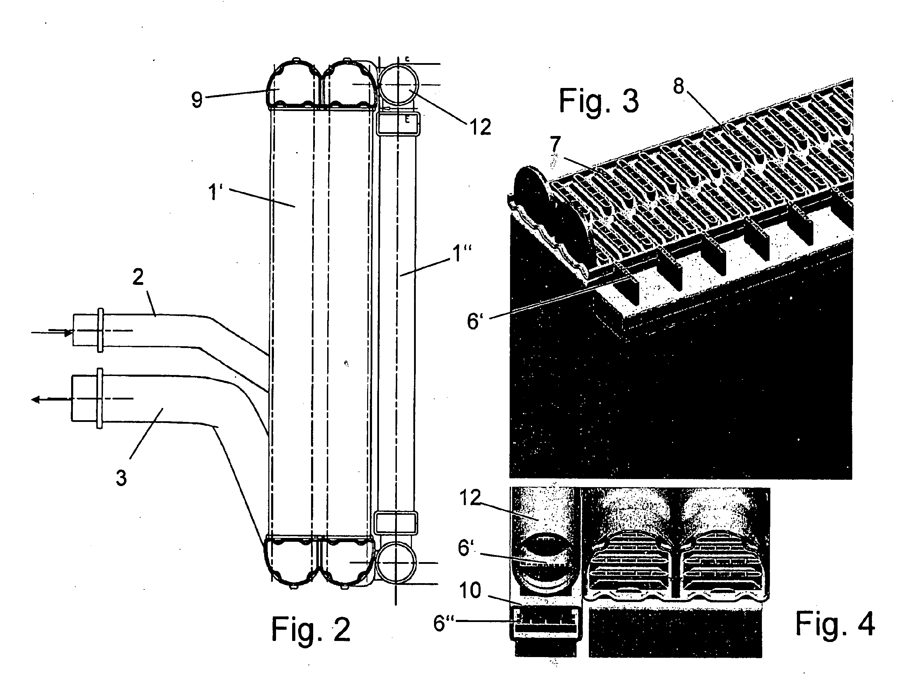

Die normale Luftströmungsrichtung ist in den Figuren 1 und 2 durch Pfeile angedeutet. Der Verdampfer 1 weist im größeren, luftanströmseitigen Teil einen Bereich 1' mit Aufbau auf, der dem eines herkömmlichen Verdampfers entspricht, mit zwei Reihen von Flachrohren 7 und dazwischen angeordneten Wellrippen 8. Die Flachrohre 7 enden jeweils in einem Sammelbehälter 9. Wie aus Figuren 1 und 2 ersichtlich, tritt das Kältemittel an der Schmalseite des oberen Sammelbehälters 9 luftabströmseitig in den Verdampfer 1 ein und verlässt ihn auf der gleichen Schmalseite im luftanströmseitigen Bereich des Sammelbehälters 9.

Der andere Bereich des Verdampfers 1, nämlich der Kältespeicherbereich 1", welcher vom Prinzip her getrennt als eigenständiger Bereich des Verdampfers 1 ausgebildet ist und in welchem die Kältespeicherelemente 5 vorgesehen sind, wird durch den kleineren, luftabströmseitigen Teil des Verdampfers 1 gebildet.

Die Kältespeicher-Flachrohre 6 im Kältespeicherbereich 1" und die herkömmlichen Flachrohre 7 im Bereich 1' sind, wie insbesondere aus Fig. 8 ersichtlich, derart angeordnet, dass jeweils beim ersten, dritten, fünften usw. Flachrohr 7 mit demselben in Luftströmungsrichtung fluchtend ein Kältespeicher-Flachrohr 6 jeweils fluchtend angeordnet ist.

Da die Zwischenräume zwischen den Kältespeicher-Flachrohren 6, die vorliegend in Luftströmungsrichtung schmaler, aber quer hierzu breiter ausgebildet sind, als die Flachrohre 7, auf Grund dieser Anordnung relativ breit sind, ist der Strömungswiderstand für die den Verdampfer 1 durchströmende Luft in Vergleich zum Strömungswiderstand des ersten Bereichs 1' des Verdampfers 1 nahezu vernachlässigbar und kann für die Auslegung des Verdampfers 1 in Hinblick auf die Luftdurchströmung im Wesentlichen vernachlässigt werden, so dass gegenüber einer Basisvariante des Verdampfers ohne den Kältespeicherbereich 1" keine oder nur unwesentliche Neuberechnungen in Hinblick auf die Luftströmung erfolgen müssen. Alternativ können die Flachrohre 6 und 7 auf beliebige andere Weise angeordnet sind, bspw. fluchtend oder auf Lücke.

Die Kältespeicher-Flachrohre 6 weisen einen doppelwandigen Aufbau mit einer Mehrzahl von Kältemittel-Kanälen 6' und Kältespeichermedium-Kanälen 6" auf, wobei die Kältemittel-Kanäle 6' innen angeordnet sind (siehe Fig. 8). Dabei sind die Kältespeicher-Flachrohre 6 derart angeordnet, dass die als Kältespeicherelemente 5 dienenden Kältespeichermedium-Kanäle 6" jeweils in einem von zwei Kältespeichermedium-Sammelbehältern 10 enden, so dass das Kältespeicherelement 5 nur einen einzigen Hohlraum aufweist, welcher - von einem Ausgleichsraum abgesehen - vollständig mit dem Kältespeichermedium gefüllt ist. Das Befüllen erfolgt über eine Öffnung im Kältespeichermedium-Sammelbehätter 10 in einem einzigen Arbeitsgang. Nach dem Befüllen wird die Öffnung fest verschlossen, so dass ein unbefugtes Öffnen sicher verhindert wird.

Im Inneren des durchgehenden Hohlraums sind gemäß einer nicht in der Zeichnung dargestellten Variante Elemente vorgesehen, wie vorliegend ein Kunststoff-Vlies, die zur Verbesserung des Wärmetransports sowie zur Erhöhung der inneren Oberfläche dienen, um die Kristallbildung des Latentmediums zu beschleunigen.

Die Kältemittel-Kanäle 6' ragen mit ihren Enden jeweils durch die entsprechenden Kältespeichermedium-Sammelbehälter 10 hindurch und enden jeweils in einem getrennt vom Sammelbehälter 9 ausgebildeten, vorliegend als Rohr ausgebildeten Sammelbehälter 12, auf die im Folgenden als Sammelrohre Bezug genommen wird.

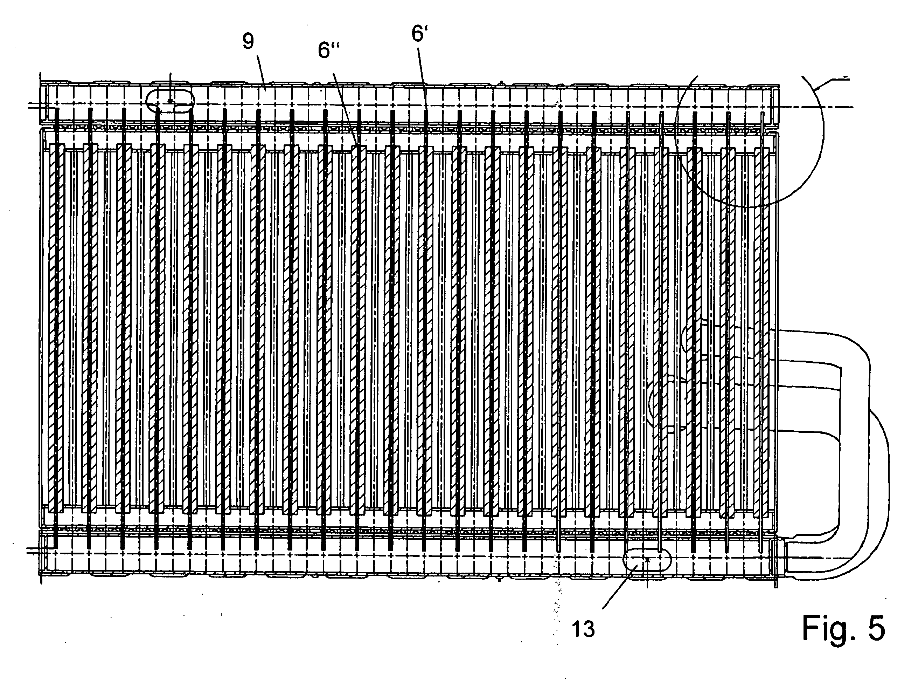

Jedes der Sammelrohre ist über je eine langlochartige Überströmöffnung (nicht dargestellt) mit einer an entsprechender Stelle angeordnete, langlochartige Überströmöffnung 13 der Sammelbehälter 9 verbunden (siehe Fig. 5).

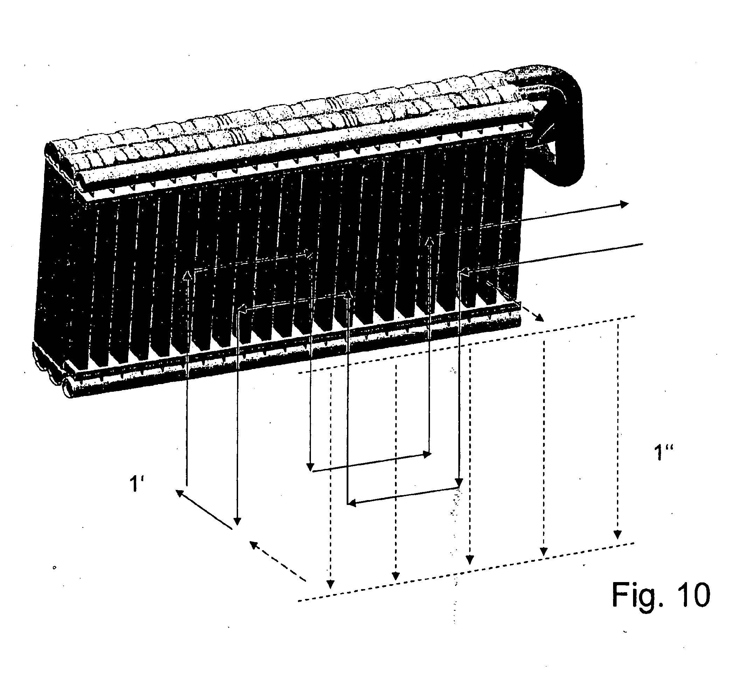

Der Verdampfer 1 wird in seinem herkömmlichen Bereich 1' derart durchströmt, dass der Kältemittelstrom in der Verdampferbreite zweimal umgelenkt wird, bevor er in der Tiefe entgegen der Luftströmungsrichtung umgelenkt wird. Im luftanströmseitigen Bereich wird er ebenfalls zweimal in der Breite umgelenkt. Es handelt sich somit um einen Verdampfer mit sechs Blöcken B1 bis B6, wobei je drei Blöcke in Breitenrichtung des Verdampfers 1 vorgesehen sind (d.h. in der zuerst durchströmten Reihe die Blöcke B1 bis B3 und in der zuletzt durchströmten Reihe die Blöcke B4 bis B6) und die einzelnen Blöcke B1 bis B6 der beiden Blockreihen im Kreuz-Gegenstrombetrieb durchströmt werden. Dieser Kältemittelströmungsverlauf ist in Fig. 10 durch Pfeile mit durchgehender Linie dargestellt.

Von dem Kältemitteistrom wird über die Überströmöffnung 13 im Sammelbehälter 9, kurz nach dem Eintritt vom Einspritzrohr 2 in den Sammelbehälter 9 im ersten Block B1 ein Teil des Kältemittels abgezweigt, welches über die Überströmöffnung in das Sammelrohr gelangt und über das Sammelrohr auf die Kältemittel-Kanäle 6' der Flachrohre 6 verteilt wird, welche vorliegend in einer Richtung durchströmt werden, d.h. es liegt über die gesamte Breite des Verdampfers 1 im Kältespeicherbereich 1" nur ein Speicherelementblock vor. Der abgezweigte Teil des Kältemittels wird über die zweite Überströmöffnung, die am zweiten Sammelrohr vorgesehen ist, und die entsprechende zweite Überströmöffnung 13 am anderen Sammelbehälter 9 wieder dem Haupt-Kältemittelstrom zugeführt, welches in diesem Bereich des Blocks B3 in der Tiefe zum Block B4 umgelenkt wird. Der Kältemittelströmungsverlauf des Teilstroms ist in Fig. 10 durch Pfeile mit gestrichelter Linie dargestellt.

An Stelle des zuvor beschriebenen Aufbaus können die Sammelbehälter auch auf andere Weise, insbesondere in Plattenbauweise, aufgebaut sein.

In den weiteren Figuren sind verschiedene Varianten der Kältemitteldurchleitung durch den Kältespeicherbereich 1" des Verdampfers 1 dargestellt, die sicherstellen sollen, dass das Kältespeichermedium in allen Kältespeichermedium-Kanälen 6" möglichst gleichmäßig seine Phasenumwandlung durchläuft. Hierfür ist sicherzustellen, dass der abgezweigte Teilstrom des Kältemittels möglichst gleichmäßig auf die Flachrohre 6 mit ihren Kältemittel-Kanälen 6' verteilt wird.

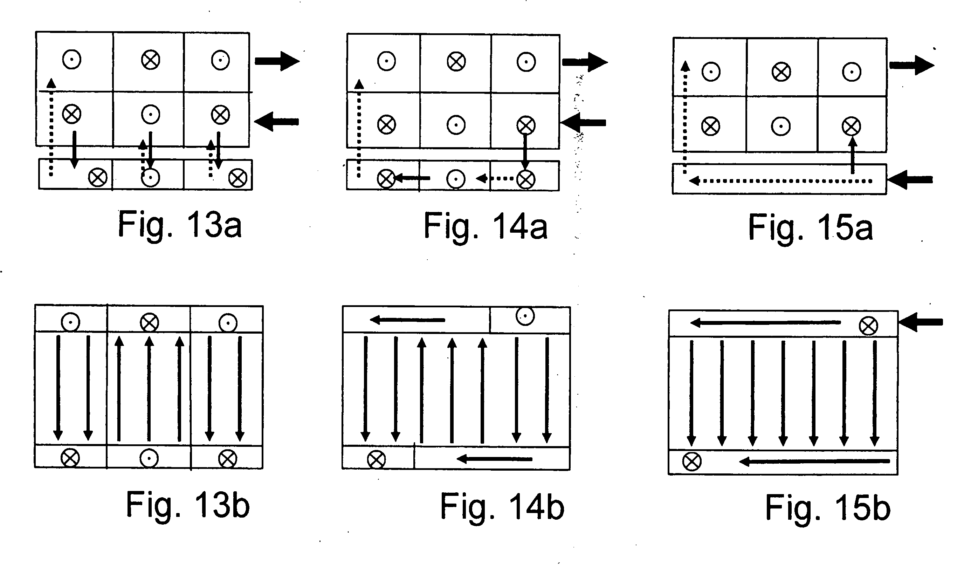

Die Figuren 13a und 13b zeigen eine Verschaltungsvariante mit 3-BlockVerschaltung im Speicherelement. Hierbei wird das Kältemittel aus jedem der ersten drei Blöcke B1 bis B3 des herkömmlichen Bereichs 1' des Verdampfers 1 in den zugehörigen Speicherelementblock verteilt (d.h. es gibt drei Speicherelementblöcke) und wieder zurückgeführt. Durch die verringerte Anzahl parallel geschalteter Flachrohre pro Speicherelementblock ergibt sich eine verbesserte Kältemittelverteüung als bei dem zuvor beschriebenen Ausführungsbeispiel.

Gemäß einer nicht in der Zeichnung dargestellten Abwandlung dieser Variante sind mehr als nur eine Aus- und Eintrittsöffnung je Block des herkömmlichem Bereichs des Verdampfers vorgesehen, so dass bespielsweise sechs Speicherelementblöcke vorgesehen sind.

Gemäß der zweiten, in den Figuren 14a und 14b dargestellten Variante erfolgt die Kältemktelströmungsführung im Speicherelement entsprechend der im Serienverdampfer (d.h. 2x Umlenkung in der Breite). Bei dieser Verschaltung wird bei einmaligem Überströmen aus dem herkömmlichen Bereich 1' des Verdampfers 1 nur ein Drittel der Flachrohre des Speicherelement parallel mit Kältemittel beaufschlagt. Andere Verschaltungen sind im Kältespeicherbereich 1" ebenfalls möglich, bspw. können fünf Speicherelementblöcke vorgesehen sein.

Figuren 15a und 15b zeigen einen direkten Kältemitteleintritt in den Kältemittelspeicherbereich 1" an Stelle in den herkömmlichen Bereich 1' des Verdampfers 1. Mit dieser Variante lässt sich eine bevorzugte Versorgung des Speicherelementblocks für den Fall gewährleisten, dass durch die Übertrittsöffnungen zu wenig KM aus dem herkömmlichen Bereich 1' des Verdampfers 1 abgezogen werden kann.

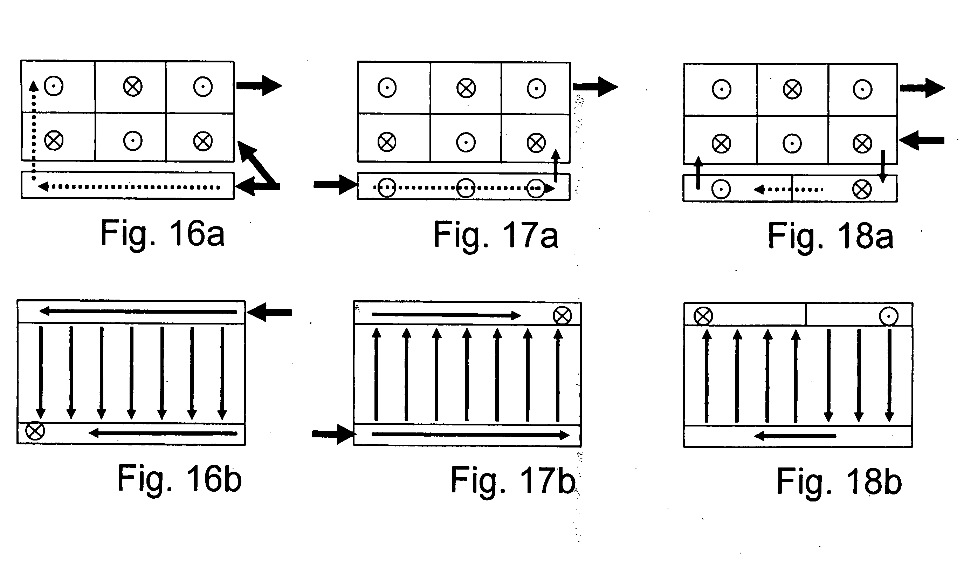

In den Figuren 16a und 16b ist als vierte Variante ein geteilter Kältemitteleintritt für den herkömmlichen Bereich 1' des Verdampfers 1 und den Kältespelcherbereich 1" vorgesehen, d.h. die Abzweigung des Teilstroms für den Kältespeicherbereich 1" erfolgt noch vor dem Eintritt des Kältemittels in den Verdampfer 1 im Bereich des Einspritzrohres. Hierbei lässt sich die Kältemittelverteilung auf die beiden Eintrittsöffnungen gegebenenfalls über den Einspritzrohrdurchmesser und den Druckverlust im herkömmlichen Bereich 1' des Verdampfers 1 und im Kältespeicherbereich 1' 'optimieren.

Figuren 17a und 17b zeigen eine Verschaltungsvariante mit einer Serienschaltung des Kältespeicherbereich 1" und, nachgeschaltet, des herkömmlichen Bereichs 1' des Verdampfers 1. Bei dieser Variante wird zunächst das Kältespeichermedium im Kältespeicherbereich 1" über den Kältemittelstrom gefroren (vorliegend erfolgt der Eintritt von unten), bevor das Kältemittel dann in der üblichen Stromführung den herkömmlichen Bereich 1' des Verdampfers 1 durchläuft. Da der gesamte Kältemittelstrom vollständig durch den Kältespeicherbereich 1" geleitet wird, friert diese Variante am schnellsten das Kältespeichermedium ein.

In den Figuren 18a und 18b ist eine weitere Verschaltungsvariante dargestellt, gemäß der wiederum ein Teilstrom im ersten Block B1 abgezweigt wird. Der Kältespeicherbereich 1" weist hierbei vorliegend zwei Blöcke auf, die in unterschiedlichen Richtungen durchströmt werden. Das Kältemittel aus dem Kältespeicherbereich 1" tritt hierbei am in den Sammelbehälter des dritten Blocks B3 ein und durchströmt denselben gemeinsam, d.h. der dritte Block B3 wird vom gesamten Kältemittel durchströmt, während die ersten beiden Blöcke B1 und B2 nur von einem (größeren) Kältemittelteilstrom durchströmt werden. Die beiden Blöcke des Kältespeicherbereichs 1" weisen gemäß der dargestellten Variante eine unterschiedliche Bereite auf, wobei der zuerst durchströmte Block schmaler als der danach durchströmte Block ist.

Die Verschaltungsvarianten ermöglichen eine verbesserte Dynamik des Be- und Entladevorgangs zu optimieren und das Austrittstemperaturprofil des Verdampfers bei Fahrzeugstopps zu homogenisieren.

Alle Varianten sind unabhängig vom Kältemittel (R134a, R744), der Sammlerkonstruktion (gebogener Sammler, Plattenbauweise) und Blockverschaltung des Serienverdampfers (bspw. 2- oder 4-Blockverschaltung).

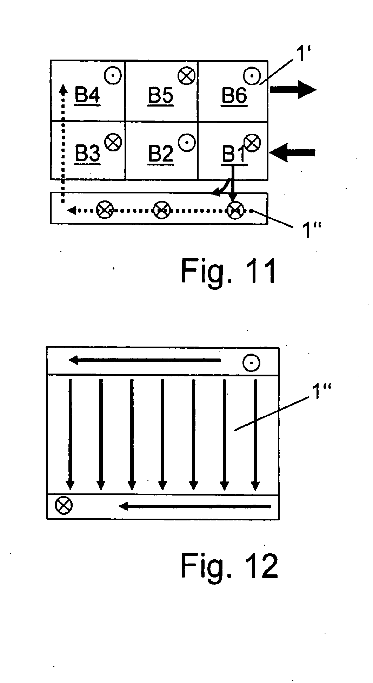

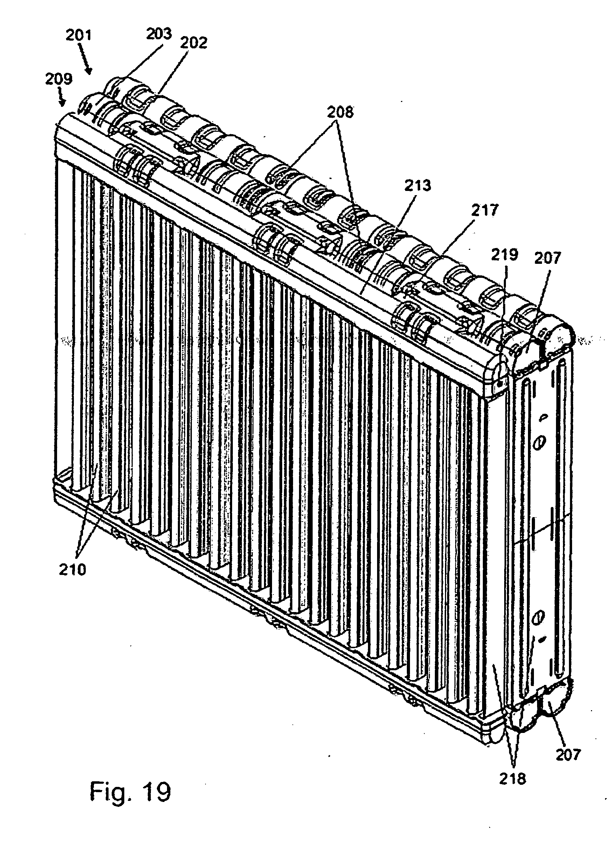

Ein zweites erfindungsgemäßes Ausführungsbeispiel ist in Fig. 19 dargestellt. Dieser Wärmetauscher funktioniert bezüglich der Fluidwege auf gleiche Weise wie der in Fig. 1 gezeigte, wobei die Fluidwege gemäß der Darstellungen in Fig. 11 und Fig. 12 verlaufen.

Ein erster Bereich 201 umfasst einen im Prinzip bekannten Verdampfer mit zwei in Durchströmungsrichtung der Luft hintereinander angeordneten Verdampferebenen 202, 203. In senkrechter Richtung verlaufen in jeder der Ebenen eine Vielzahl von parallelen Kältemittelrohren 204, die jeweils als extrudierte Profile mit mehreren separaten Kammern ausgebildet sind. endseitig münden die Rohre 204 jeweils in oberen oder unteren Sammelbehältern 205, 206 der jeweiligen Ebene.

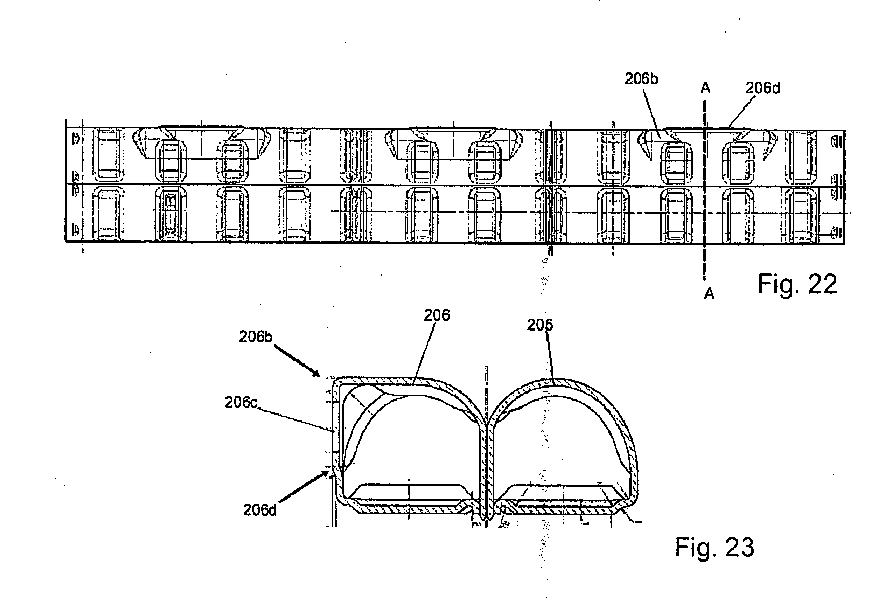

Die Sammelbehälter sind als Blechformteile ausgebildet. Aus einem Aluminiumblech werden dabei Öffnungen zum Einführen der Rohre 204 ausgestanzt, verrundete Ausformungen durch Tiefziehen ausgebildet und ein Teil des Blechs zur Herstellung eines geschlossenen Kastens umgebogen (siehe insbesondere Fig. 23). Hierdurch bleiben Stirnseiten der Sammelbehälter 205, 206 zunächst offen und werden im Zuge der weiteren Fertigstellung mittels Abschlusskappen 207 verschlossen. die Abschlusskappen dienen zweckmäßig zur Zuführung der Kältemittelleitungen einer Klimaanlage zum Verdampfer (nur im ersten und dritten Ausführungsbeispiel dargestellt).

In den Blechformteilen der Sammelbehälter sind zudem jeweils- zwei Rillen 208 ausgeformt, in denen Trennstücke zur Separation der verschiedenen Blöcke des Verdampfers einsetzbar sind. Hierdurch ist eine Untergruppe der Rohre 204 nur mit jeweils einem separierten Abschnitt des jeweiligen Sammelbehälter 205, 206 verbunden.

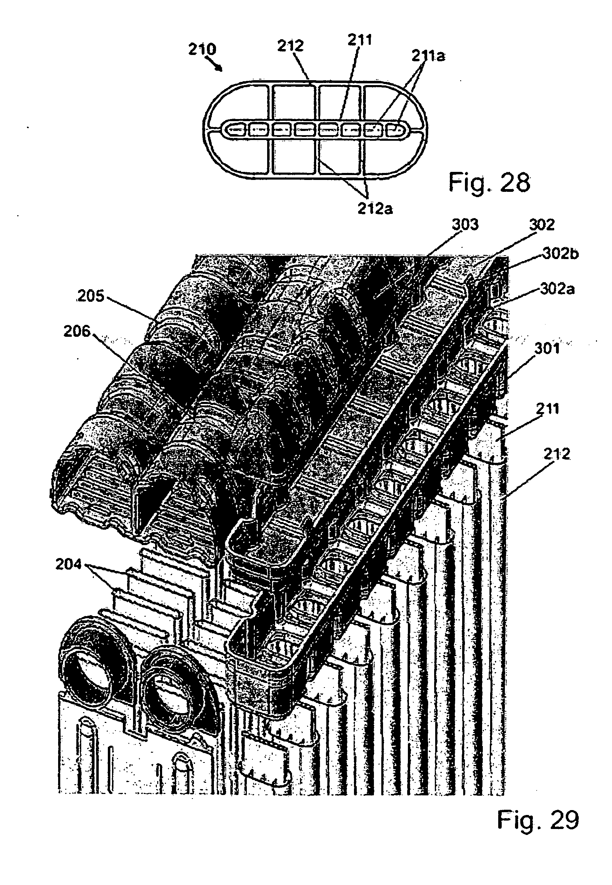

Auf einer Seite des zweilagigen Verdampfers 201 bzw. des ersten Bereichs des Wärmeübertragers ist als Kältespeicher mit Verdampferfunktion der zweite Bereich 209 angeordnet. Wie beim ersten Ausführungsbeispiel umfasst dieser Teil des Wärmeübertragers ebenfalls eine Mehrzahl von parallelen Rohren 210, die im Unterschied zu den Rohren 204 des ersten Bereichs 201 einen ersten Kanal 211 und einen zweiten Kanal 212 umfassen (siehe Querschnittsdarstettüng in Fig. 28). Der erste Kanal 211 ist ein extrudiertes Flachrohr mit mehreren Kammern 211 a und führt das Kältemittel auf seinen Strömungspfaden gemäß Fig. 12. Der zweite Kanal 212 ist als extrudiertes Profil mit zwei geraden, längeren Seitenflächen und zwei gebogenen, kürzeren Stirnflächen ausgeformt, wodurch die den zweiten Kanal umströmende Luft günstig geleitet wird. In dem zweiten Kanal befindet sich das Kältespeichermedium wie im ersten Ausführungsbeispiel beschrieben.

Das Flachrohr 211 des ersten Kanals ist in das Profil des zweiten Kanals eingeschoben. Hierbei weist der zweite Kanal 212 im Querschnitt eine Anzahl von Streben 212a auf, die sich von der Außenwand des zweiten Kanals 212 bis zur Wand des eingeschobenen ersten Kanals 211 erstrecken. Die Streben 212a erfüllen neben einer Separation des zweiten Kanals 212 in mehrere Kammern und einer Verbesserung des Wärmetransports zudem die Funktion einer radialen Führung bzw. Halterung des eingeschobenen ersten Kanals. Je nach vorgesehenen Maßen und Toleranzen kann die Führung stramm oder locker sein. Es ist auch denkbar, den ersten und zweiten Kanal über die Streben 212a miteinander zu verlöten, etwa indem die Außenfläche des ersten Kanalrohrs 212 mit Lot plattiert wird.

Die Rohre 210 des zweiten Bereichs 209 münden endseitig in einem oberen Sammelbereich 213 und einem unteren Sammelbereich 214. Jeder der Samelbereiche 213, 214 umfasst jeweils einen ersten Sammelbehälter 213a, 214a und einen daran unmittelbar angrenzenden zweiten Sammelbehälter 213b, 214b. Von den ersten Sammelbehältern 213a, 214a aus wird das Kältemittel auf die inneren Rohre 211 verteilt bzw. aus ihnen gesammelt. Die zweiten Sammelbehälter 213b, 214b stehen dagegen jeweils mit den äußeren Rohren 212 in Austausch und führen demnach das Kältespeichermedium.

Ähnlich wie im ersten Ausführungsbeispiel stehen bei diesem Aufbau die inneren Kanäle 211 der Rohre 210 endseitig über die äußeren Kanäle 212 über und durchgreifen die zweiten Sammelbehälter 213b, 214b vollständig, wobei sie an den Durchgriffsöffnungen der Sammelbehälter dichtend verlötet sind. Die äußeren Rohre 212 münden dagegen jeweils in den zweiten Sammelbehältern 213b, 214b. Die Höhe der zweiten Sammelbehälter beträgt vorzugsweise - und insbesondere in Abhängigkeit von der Einbaulage bzw. der Befüllmenge mit Käitespeichermedium - 5 bis 25 mm, vorzugsweise 8 bis 20 mm.

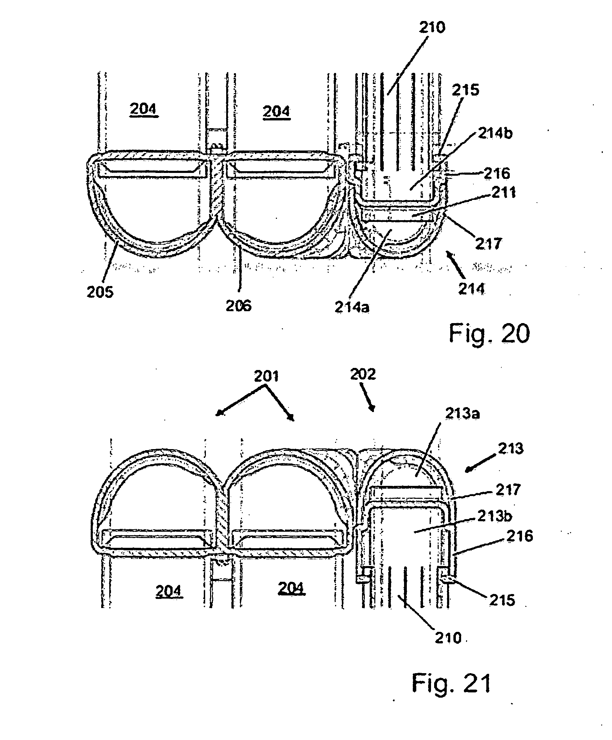

Die Sammelbereiche 213, 214 sind jeweils aus drei Blechformteilen aufgebaut, nämlich einem Bodenteil 215, einem Zwischenteil 216 und einem Deckelteil 217. Wie die Schnittzeichnungen Fig. 20 (unterer Sammelbereich 214) und Fig. 21 (oberer Sammelbereich 213) verdeutlichen, sind die Formteile 215, 216, 217 nicht identisch, aber ähnlich ausgeformt. Insbesondere weist im Fall des oberen Sammelbereichs 213 das Zwischenteil 216 eine etwas größere Höhe auf als das Zwischenteil 216 des unteren Sammelbereichs 214. Hierdurch wird im oberen Sammelbereich 213 ein größeres Sammelvolumen für das Kältespeichermedium bereitgestellt. Hieraus folgt, da eine einheitliche obere Abschlußebene der Bereiche bauraumbedingt vorgegeben ist, ein Überstand über die oberen Sammler des in der Tiefe anschließenden ersten Bereichs 201 (siehe Fig. 21). Dieser im Verhältnis zur freien Länge der Rohre 204 geringe Überstand beeinträchtigt die Luftdurchströmung des Wärmeübertragers nur unwesentlich, so dass die Vorteile aus dem größeren Sammlervolumen überwiegen. Im Fall der unteren Sammelbereiche ist es gewünscht, dass die Sammler von erstem und zweitem Bereich auf gleicher Höhe abschließen, um einen Ablauf von Kondenswasser auch auf der Seite des zweiten Bereichs zu ermöglichen (siehe insbesondere Fig. 20).

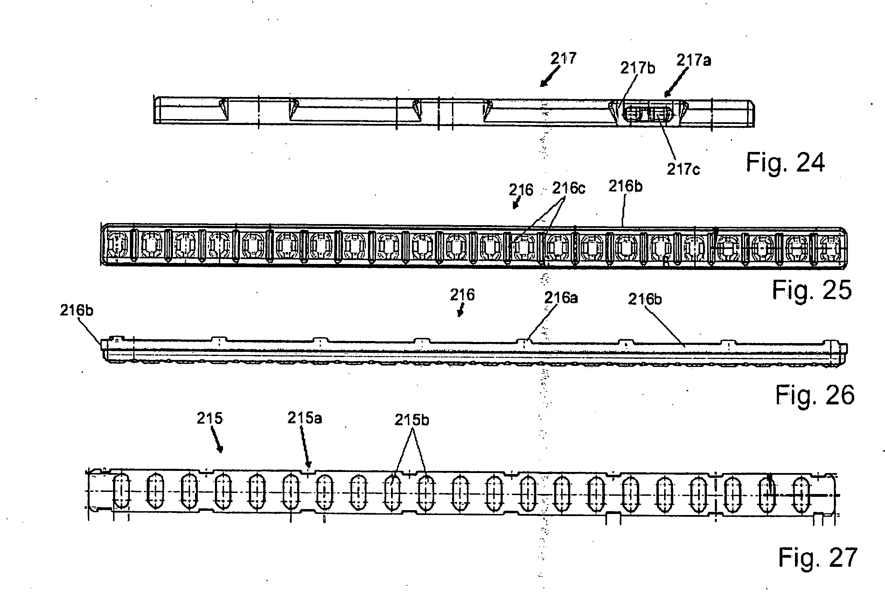

Das Blechformteil 215 des Bodenteils ist als Stanzteil aus einem ebenen Blech hergestellt (siehe Fig. 27). Es weist eine Mehrzahl von Einbuchtungen 215a zur formschlüssigen Postionierung beim Zusammenbau auf, in die korrespondierende Zinken 216a des Zwischenteils 216 eingreifen. Zudem ist für jedes der Rohre 210 eine Ausstanzung 215b vorgesehen, die im Rahmen einer genau definierten Maßtoleranz dem Außenumfang der zweiten Kanäle 212 der Rohre 210 entsprechen.

Das Blechformteil 216 des Zwischenteils ist als Tiefziehteil hergestellt. Sein Umriss entspricht gemäß der Form der Sammelbereiche 213, 214 einem Rechteck mit einem ausgeprägtem Seitenverhältnis von etwa 18:1. Durch das Tiefziehen wird ein vollständig umlaufender Rand 216b aufgebogen, so dass das Formteil 216 insgesamt wannenförmig ist. In der umrandeten Fläche des Formteils sind Durchbrechungen 216 c vorgesehen, die mit dem Außenumfang der inneren Kanäle 211 der Rohre 210 korrespondieren.

Das Blechformteil oder Deckelteil 217 ist ebenfalls als wannenförmiges Tiefziehteil ausgeformt. Sein vollständig umlaufender Rand übergreift das Zwischenteil 216 im montierten und verlöteten Zustand teilweise, wobei die Ränder des Deckelteils 217 und des Zwischenteils 217 jeweils in die gleiche Richtung weisen.

Ein Hohlraum zwischen Deckelteil 217 und Zwischenteil 216 bildet den ersten Sammelbehälter 213. Ein Hohlraum zwischen Zwischenteil 216 und Bodenteil 215 bildet den zweiten Sammelbehälter 214. Durch das Zwischenteil 216 wird somit jeweils der erste Sammelbehälter 213 von dem zweiten Sammelbehälter 214 getrennt. Insgesamt können so durch die drei Blechformteile die beiden benachbarten Sammelbehälter vollständig und mit einfachem Herstellungsverfahren ausgebildet werden, wobei insbesondere zusätzliche stirnseitige Abschlussdeckel wie etwa im Fall der Sammler des ersten Bereichs 201 nicht erforderlich sind.

Das Deckelteil 217 hat über den größten Teil seiner Länge einen im wesentlichen U-förmigen Querschnitt (siehe etwa Fig. 20, Fig. 21). An drei Positionen ist jeweils im Zuge des Tiefziehens ein erkerartiger Vorsprung 217a seitlich ausgebildet. Diese erkerartige Ausformung hat einen ebenen, senkrecht ausgerichteten Abschnitt, der einem korrespondierenden Abschnitt 206b eines ähnlichen Erkers 206a des Sammlers 206 des ersten Bereichs 201 flächig angrenzend gegenüberliegt. Diese Abschnitte 206b, 217b sind im montierten Zustand flächig miteinander verlötet, so dass eine mechanisch sichere Halterung des zweiten Bereichs an dem ersten Bereich gegeben ist. Insgesamt liegen sechs solche Verbindungen vor; jeweils drei auf der Oberseite und drei auf der Unterseite des Wärmeübertragers.

Zwei der Abschnitte weisen zudem jeweils überlappende Durchbrechungen 217c, 206c auf, so dass jeweils eine Überströmöffnung zwischen erstem Bereich und zweitem Bereich ausgebildet ist. Als Abmessungen für die Überströmöffnungen bieten sich eine Breite von 5 bis 40 mm, insbesondere 20 bis 30 mm und eine Höhe von 2 bis 20 mm, insbesondere 5 bis 10 mm an.

Im Interesse einer geringen Fehlerquote bei der Verlötung weisen die ebenen Abschnitte 206b, 217b zudem herausgezogene Verbindungsflächen (siehe etwa 206d in Fig. 23) auf, die typisch um weniger als einen Millimeter über die ebenen Abschnitte hervorstehen. Solche Verbindungsflächen bilden zweckmäßig Umrandungen um die Durchbrechungen.

Der Wärmeübertrager umfasst zudem gemäß Fig. 19 seitliche Abschlussbleche 218, die eine Montage des Wärmeübertragers erleichtern und die Führung der zu kühlenden Luft verbessern. Die Abschlussbleche 218 sind keine notwendigen Bauteile.

Eine Befüllöffnung 219 ist in der Stirnseite des oberen Zwischenteils 216 eingebracht und wird entweder nach einem Befüllen mit Kältespeichermedium verschlossen oder mit einem Ausgleichsbehälter verbunden. Die Befüllöffnung kann verschließbar mit üblichen Verfahren, wie beispielweise durch Kleben, Nieten, Schweißen, Löten, form- oder reibschlüssige Verbindung oder eine Kombination daraus, ausgeführt sein.

Der Wärmeübertrager des dritten Ausführungsbeispiels nach Fig. 29 ist ähnlich dem zweiten Ausführungsbeispiel konstruiert. Der erste Bereich und die Rohre des zweiten Bereichs sind identisch ausgeführt, weshalb hier die gleichen Bezugszeichen wie im zweiten Ausführungsbeispiel verwendet werden.

Die Sammlerbereiche des zweiten Bereichs bestehen ebenfalls aus drei Blechformteilen, nämlich einem Bodenteil 301, einem Zwischenteil 302 und einem Deckelteil 303. Hierbei sind sämtliche der drei Teile als wannenförmige Tiefziehteile ausgebildet. Das Bodenteil 301 übergreift mit seinem Rand einen Teil der Außenwand des Zwischenteils 302, dessen aufgebogener Rand 302a gegenüber dem zweiten Ausführungsbeispiel andersherum gerichtet ist. An dem Rand 302a ist eine Anzahl von federnden oder biegbaren Laschen 302b vorgesehen, mittels derer das aufgesetzte Deckelteil 303 im Zuge einer Vormontage klammernd gehalten wird.

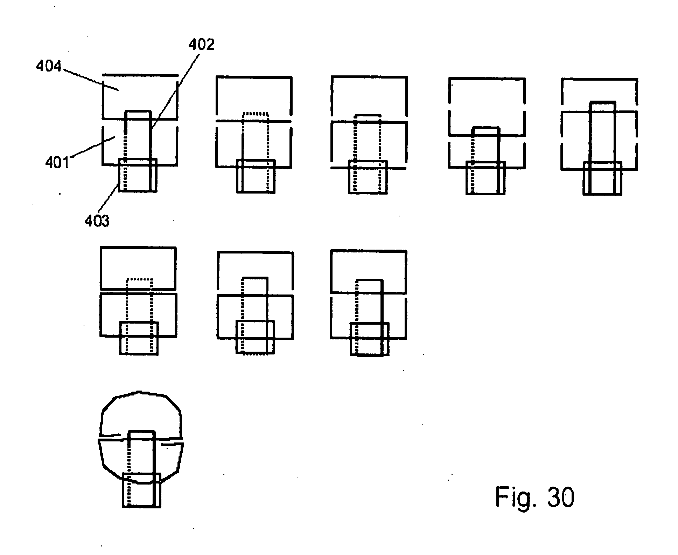

In der Darstellung Fig. 30 sind einige Grundkonzepte schematisch dargestellt, nach denen ein Sammlerbereich mit zwei Sammelbehältern aus einfachen Blechformteilen aufgebaut werden kann. Dabei wird jeweils ein unterer Sammelbehälter 401 von einem ersten Rohr 402 durchgriffen, wobei ein zweites Rohr 403 in ihm mündet. Das erste Rohr 402 mündet in einem unmittelbar benachbarten oberen Sammelbehälter 404, der nur durch eine Formblechwand von dem unteren Sammelbehälter 401 getrennt ist.

Im Fall der fünf Darstellungen der oberen Reihe werden jeweils drei Formblechteile miteinander verbunden, wobei einige der Formblechteile mit aufgebogenen Rändern versehen sind (Tiefziehteile oder abgekantete Bleche) oder auch flache Bleche sind (einfache Stanzteile). Schematisch entspricht die mittlere Darstellung der oberen Reihe dem zweiten Ausführungsbeispiel und die vierte Darstellung von links entspricht dem dritten Ausführungsbeispiel.

Die drei Beispiele der mittleren Reihe zeigen Lösungen mit nur zwei Blechformteilen.

Das untere Beispiel zeigt eine Lösung, bei der beide Sammelbehälter aus nur einem S-förmig umgebogenen Blechteil geformt werden.

Es versteht sich, die einzelnen Merkmale der verschiedenen Ausführungsbeispiele je nach Anforderungen sinnvoll miteinander kombiniert werden können.

Im Übrigen ist es auch denkbar, dass bei den genannten Ausführungsbeispielen das Kältemittel in umgekehrter Richtung wie oben beschrieben den Wärmetauscher durchströmt. Da sich der Druck in Richtung Saugleitung verringert und damit die Verdampfungstemperatur des Kältemittels sinkt, kann hier ggf. eine verbesserte Abkühldynamik des Speicherverdampfers, insbesondere des Latentmediums resultieren.

## Patentansprüche

1. Wärmeübertrager, insbesondere Verdampfer (1), insbesondere für eine Kraftfahrzeug-Klimaanlage, mit einer Mehrzahl nebeneinanderliegend angeordneter, kältemittelführender Rohre und mit wenigstens einem Kältespeicher (4), in welchem ein Kältespeichermedium vorgesehen ist, **dadurch gekennzeichnet, dass** der Verdampfer (1) zwei parallel zueinander angeordnete Bereiche (1', 201 und 1 ", 209) aufweist, wobei der erste Bereich (1', 201) in seinem Aufbau einem herkömmlichen Verdampfer entspricht, der Kältespeicher (4) in einen eigenständigen zweiten Bereich (1 ", 209) angeordnet ist, der von zumindest einem Teil des Kältemittelstroms durchströmbar ist, welcher auch zumindest ein Teil des ersten Bereichs (1', 201) durchströmt, und der erste und der zweite Bereich durch mindestens eine Überströmöffnung (13, 217c) miteinander verbunden sind.

2. Wärmeübertrager nach Anspruch 1, **dadurch gekennzeichnet, dass** die beiden Bereiche (1', 201, 1", 209) über die gesamte Breite verlaufen.

3. Wärmeübertrager nach Anspruch 1 oder 2, **dadurch gekennzeichnet, dass** mindestens zwei, vorzugsweise sechs Überströmöffnungen (13, 217c) vorgesehen sind.

4. Wärmeübertrager nach Anspruch einem der vorhergehenden Ansprüche, **dadurch gekennzeichnet, dass** in mindestens einem Kältespeicherelement (5, 210) mindestens ein kältemittelführendes Rohr (211) angeordnet ist.

5. Wärmeübertrager nach einem der vorhergehenden Ansprüche, **dadurch gekennzeichnet, dass** das kältemittelführende und/oder das Kältespeichermedium enthaltende Rohr ein doppelwandiges Flachrohr (6, 210) ist, wobei sich das Kältemittel im zentralen Bereich und das Kältespeichermedium im äußeren Bereich befindet.

6. Wärmeübertrager nach einem der vorhergehenden Ansprüche, **dadurch gekennzeichnet, dass** die kältemittelführenden Rohre des zweiten Bereichs (1", 209) in einem Sammelbehälter (12, 213a, 214a) enden, der getrennt von und lediglich über eine oder mehrere Überströmöffnungen (13, 217c) mit einem Sammelbehälter (9, 206) des ersten Bereichs (1', 201) ausgebildet ist.

7. Wärmeübertrager nach einem der vorhergehenden Ansprüche, **dadurch gekennzeichnet, dass** die kältespeichermediumführenden Rohre beziehungsweise Kanäle in einem Kältespeichermedium-Sammelbehälter (10, 213b, 214b) enden, durch den die kältemittelführenden Rohre beziehungsweise Kanäle ragen, die in einem getrennten Sammelbehälter (12, 213a, 214a) enden.

8. Wärmeübertrager nach einem der vorhergehenden Ansprüche, **dadurch gekennzeichnet, dass** der erste Bereich (1', 201) eine Anzahl von in unterschiedlicher Richtung vom Kältemittel durchströmbarer Blöcke (B1 bis B3) in Richtung seiner Breite benachbart dem zweiten Bereich aufweist, und der zweite Bereich (2", 209) mindestens einen Block, insbesondere eine Anzahl von in unterschiedlicher Richtung vom Kältemittel durchströmbarer Blöcke, aufweist, und sich die Anzahl und/oder Breite der einzelnen Blöcke in Breitenrichtung des Verdampfers (1) im ersten Bereich (1') und im zweiten Bereich (1") unterscheidet.

9. Wärmeübertrager nach Anspruch 8, **dadurch gekennzeichnet, dass** der erste Bereich (1', 201) direkt benachbart zum zweiten Bereich (1", 209) zwei bis vier, insbesondere drei Blöcke (B1 bis B3), und der zweite Bereich (1 ", 209) einen bis sechs Blöcke, insbesondere eins bis drei bzw. zwei bis vier Blöcke, aufweist.

10. Wärmeübertrager nach einem der vorhergehenden Ansprüchen, **dadurch gekennzeichnet, dass** die Phasenumwandlungstemperatur des Kältespeichermediums in einem Bereich von 0°C bis 30°C, vorzugsweise 1°C bis 20°C, insbesondere von 2°C bis 15°C, insbesondere bevorzugt von 4°C bis 12°C, liegt.

11. Wärmeübertrager nach einem der vorhergehenden Ansprüche, **dadurch gekennzeichnet, dass** im Kältespeicher (4) mindestens eine Einlage angeordnet ist.

12. Wärmeübertrager nach einem der vorhergehenden Ansprüche, **dadurch gekennzeichnet, dass** ein erster Sammelbehälter (213a, 214a) für das Kältemittel und ein benachbarter zweiter Sammelbehälter (213b, 214b) für das Kältespeichermedium im Wesentlichen aus zumindest einem Blechformteil (215, 216, 217, 301, 302, 303) ausgebildet sind.

13. Wärmeübertrager nach Anspruch 12, **dadurch gekennzeichnet, dass** der erste Sammelbehälter (213a, 214a) und der benachbarte zweite Sammelbehälter (213b, 214b) insgesamt im Wesentlichen aus drei Blechformteilen ausgebildet sind, umfassend ein Bodenteil (215, 301), ein Zwischenteil (216, 302) und ein Deckelteil (217, 303).

14. Wärmeübertrager nach Anspruch 13, **dadurch gekennzeichnet, dass** zumindest eines der drei Blechformteile (216, 217, 301, 302, 303) als im Wesentlichen wannenförmiges Teil mit einem umlaufenden, insbesondere im Bereich einer Stirnseite aufgebogenen Rand (216b, 302a) ausgebildet ist.

15. Wärmeübertrager nach Anspruch 13 oder 14, **dadurch gekennzeichnet, dass** zumindest eines der drei Blechformteile (215, 216, 217, 301, 302, 303) als Tiefziehteil ausgebildet ist.

## Claims

1. Heat exchanger, in particular evaporator (1), in particular for a motor vehicle air conditioning system, with a plurality of mutually adjacent, refrigerant-carrying tubes and with at least one cold accumulator (4) in which a cold accumulator medium is provided, **characterised in that** the evaporator (1) comprises two regions (1', 201 and 1", 209) arranged parallel to one another, wherein the first region (1', 201) corresponds in its structure to a conventional evaporator, wherein the cold accumulator (4) is disposed in an independent second region (1", 209) through which at least a part of the refrigerant flow which also flows through at least a part of the first region (1', 201) can flow, and wherein the first and second regions are connected to each other by at least one overflow opening (13, 217c).

2. Heat exchanger according to claim 1, **characterised in that** the two regions (1', 201, 1 ", 209) extend across the entire width.

3. Heat exchanger according to claim 1 or 2, **characterised in that** at least two, preferably six, overflow openings (13, 217c) are provided.

4. Heat exchanger according to any of the preceding claims, **characterised in that** at least one refrigerant-carrying tube (211) is arranged in at least one cold accumulator element (5, 210).

5. Heat exchanger according to any of the preceding claims, **characterised in that** the tube carrying the refrigerant and/or containing the cold accumulator medium is a double-walled flat tube (6, 210), the refrigerant being located in the central region and the cold accumulator medium being located in the outer region.

6. Heat exchanger according to any of the preceding claims, **characterised in that** the refrigerant-carrying tubes of the second region (1", 209) terminate in a reservoir (12, 213a, 214a) which is separate from reservoir (9, 206) of the first region (1', 201) and only connected thereto by one or more overflow openings (13, 217c).

7. Heat exchanger according to any of the preceding claims, **characterised in that** the tubes or passages carrying the cold accumulator medium terminate in a cold accumulator medium reservoir (10, 213b, 214b) through which the refrigerant-carrying tubes or passages which end in a separate reservoir (12, 213a, 214a) project.

8. Heat exchanger according to any of the preceding claims, **characterised in that** the first region (1', 201) comprises, in the direction of its width adjacent to the second region, a number of blocks (B1 to B3) through which the refrigerant can flow in different directions, **in that** the second region (1", 209) comprises at least one block, in particular a number of blocks, through which the refrigerant can flow in different directions, and **in that** the number and/or width of the individual blocks in the direction of the width of the evaporator (1) differ(s) in the first region (1') and in the second region (1").

9. Heat exchanger according to claim 8, **characterised in that** the first region (1', 201) comprises, directly adjacent to the second region (1", 209), two to four, in particular three, blocks (B1 to B3), and **in that** the second region (1", 209) comprises one to six, in particular one to three or two to four, blocks.

10. Heat exchanger according to any of the preceding claims, **characterised in that** the phase change temperature of the cold accumulator medium lies within a range from 0°C to 30°C, preferably from 1°C to 20°C, in particular from 2°C to 15°C, in particular preferably from 4°C to 12°C.

11. Heat exchanger according to any of the preceding claims, **characterised in that** at least one inlay is disposed in the cold accumulator (4).

12. Heat exchanger according to any of the preceding claims, **characterised in that** a first reservoir (213a, 214a) for the refrigerant and an adjacent second reservoir (213b, 214b) for the cold accumulator medium are essentially made from at least one sheet metal stamping (215, 216, 217, 301, 302, 303).

13. Heat exchanger according to claim 12, **characterised in that** the first reservoir (213a, 214a) and the adjacent second reservoir (213b, 214b) are overall essentially made from three sheet metal stampings, comprising a base part (215, 301), an intermediate part (216, 302) and a cover part (217, 303).

14. Heat exchanger according to claim 13, **characterised in that** at least one of the three sheet metal stampings (216, 217, 301, 302, 303) is a substantially trough-shaped part with an encircling edge (216b, 302a) which is turned up in the region of an end face.

15. Heat exchanger according to claim 13 or 14, **characterised in that** at least one of the three sheet metal stampings (215, 216, 217, 301, 302, 303) is a deep-drawn part.

## Revendications

1. Echangeur de chaleur, en particulier évaporateur (1), en particulier pour un système de climatisation d'un véhicule automobile, comprenant une pluralité de tubes fournissant du fluide frigorigène, disposés les uns à côté des autres, et comprenant au moins un accumulateur de froid (4) dans lequel il est prévu un milieu d'accumulateur de froid,
**caractérisé en ce que** l'évaporateur (1) présente deux zones (1', 201 et 1", 209) disposées de façon parallèle l'une à l'autre, où la première zone (1", 201) correspond, dans sa structure, à un évaporateur de type courant, où l'accumulateur de froid (4) est disposé dans une deuxième zone indépendante (1", 209) qui peut être traversée par au moins une partie du flux de fluide frigorigène qui traverse également au moins une partie de la première zone (1', 201), et la première zone et la deuxième zone sont reliées l'une à l'autre par au moins une ouverture de trop-plein (13, 217c).

2. Echangeur de chaleur selon la revendication 1,
**caractérisé en ce que** les deux zones (1', 201, 1", 209) s'étendent sur toute la largeur.

3. Echangeur de chaleur selon la revendication 1 ou 2,
**caractérisé en ce qu'**il est prévu au moins deux, de préférence six ouvertures de trop-plein (13, 217c).

4. Echangeur de chaleur selon l'une quelconque des revendications précédentes, **caractérisé en ce qu'**au moins un tube (211) fournissant du fluide frigorigène est disposé dans au moins un élément (5, 210) de l'accumulateur de froid.

5. Echangeur de chaleur selon l'une quelconque des revendications précédentes, **caractérisé en ce que** le tube fournissant le fluide frigorigène et / ou contenant le milieu d'accumulateur de froid est un tube plat (6, 210) à double paroi, où le fluide frigorigène se trouve dans la zone centrale et le milieu de l'accumulateur de froid dans la zone extérieure.

6. Echangeur de chaleur selon l'une quelconque des revendications précédentes, **caractérisé en ce que** les tubes de la deuxième zone (1", 209), fournissant le fluide frigorigène, se terminent dans un bac collecteur (12, 213a, 214a) qui est configuré en étant séparé d'un bac collecteur (9, 206) de la première zone (1', 201) et raccordé à celui-ci seulement par une ou plusieurs ouvertures de trop-plein (23, 217c).

7. Echangeur de chaleur selon l'une quelconque des revendications précédentes, **caractérisé en ce que** les tubes ou conduits fournissant le milieu d'accumulateur de froid se terminent dans un bac collecteur (10, 213b, 214b) du milieu d'accumulateur de froid, bac collecteur duquel dépassent les tubes ou conduits fournissant le fluide frigorigène, lesquels tubes ou conduits se terminent dans un bac collecteur distinct (12, 213a, 214a).

8. Echangeur de chaleur selon l'une quelconque des revendications précédentes, **caractérisé en ce que** la première zone (1', 201) présente, dans le sens de sa largeur, de façon adjacente à la deuxième zone, un certain nombre de blocs (B1 à B3) pouvant être traversés par le fluide frigorigène, dans une direction différente, et la deuxième zone (2", 209) présente au moins un bloc, en particulier un certain nombre de blocs pouvant être traversés par le fluide frigorigène dans une direction différente, et le nombre et / ou la largeur des différents blocs se différencie dans la première zone (1') et dans la deuxième zone (1"), dans le sens de la largeur de l'évaporateur (1).

9. Echangeur de chaleur selon la revendication 8,
**caractérisé en ce que** la première zone (1', 201), de façon directement adjacente à la deuxième zone (1", 209), présente deux à quatre, en particulier trois blocs (B1 à B3), la deuxième zone (1", 209) présentant un à six blocs, en particulier un à trois ou deux à quatre blocs.

10. Echangeur de chaleur selon l'une quelconque des revendications précédentes, **caractérisé en ce que** la température de changement de phase du milieu d'accumulateur de froid se trouve dans une plage comprise entre 0°C et 30°C, de préférence entre 1°C et 20°C, en particulier entre 2°C et 15°C, en particulier de préférence entre 4°C et 12°C.

11. Echangeur de chaleur selon l'une quelconque des revendications précédentes, **caractérisé en ce qu'**au moins une couche intermédiaire est disposée dans l'accumulateur de froid (4).

12. Echangeur de chaleur selon l'une quelconque des revendications précédentes, **caractérisé en ce qu'**un premier bac collecteur (213a, 214a) pour le fluide frigorigène, et un deuxième bac collecteur adjacent (213b, 214b) pour le milieu de l'accumulateur de froid, sont configurées essentiellement au moins à partir d'une pièce façonnée en tôle (215, 216, 217, 301, 302, 303).

13. Echangeur de chaleur selon la revendication 12,
**caractérisé en ce que** le premier bac collecteur (213a, 214a) et le deuxième bac collecteur adjacent (213b, 214b) sont configurés, dans l'ensemble, essentiellement à partir de trois pièces façonnées en tôle, comprenant une pièce (215, 301) formant le fond, une pièce intermédiaire (216, 302) et une pièce (217, 303) formant le couvercle.

14. Echangeur de chaleur selon la revendication 13,
**caractérisé en ce qu'**au moins l'une des trois pièces façonnées en tôle (216, 217, 301, 302, 303) est configurée essentiellement comme une pièce en forme de cuvette comprenant un bord circulaire (216b, 302a), en particulier relevé dans la zone d'un côté frontal.

15. Echangeur de chaleur selon la revendication 13 ou 14,
**caractérisé en ce qu'**au moins l'une des trois pièces façonnées en tôle (215, 216, 217, 301, 302, 303) est configurée comme une pièce réalisée par emboutissage profond.
